# EUROPÄISCHE PATENTSCHRIFT

(11) **EP 2 162 489 B1**
(45) Veröffentlichungstag und Bekanntmachung des Hinweises auf die Patenterteilung: **12.01.2011**
(21) Anmeldenummer: 08761326.1
(22) Anmeldetag: 24.06.2008
(51) Int. Cl.: C08K 5/3447, F21V 7/22, C09B 5/62, C08K 5/34, C08L 71/12, C08L 79/04, C08L 81/02, C08L 69/00

(54) **THERMOPLASTISCHE FORMMASSEN ENTHALTEND ORGANISCHE SCHWARZPIGMENTE**
THERMOPLASTIC MOLDING MATERIALS COMPRISING ORGANIC BLACK PIGMENTS
MATIÈRES THERMOPLASTIQUES POUR MOULAGE CONTENANT DES PIGMENTS NOIRS ORGANIQUES

(30) Priorität: 28.06.2007 EP 07111307
(43) Veröffentlichungstag der Anmeldung: 17.03.2010
(73) Patentinhaber: BASF SE, 67056 Ludwigshafen (DE)
(72) Erfinder: MALETZKO, Christian, 67122 Altrip (DE); BLUHM, Rüdiger, 67117 Limburgerhof (DE); TROTTE, Bernd, 69502 Hemsbach (DE); SCHERER, Günter, 67435 Neustadt (DE); BÖHM, Arno, 68305 Mannheim (DE)
(86) Internationale Anmeldenummer: PCT/EP2008/058008
(87) Internationale Veröffentlichungsnummer: WO 2009/000830

(56) Entgegenhaltungen:
- EP-A- 1 413 605
- EP-A- 1 413 606
- WO-A-2005/078023
- CH-A- 363 151

## Beschreibung

Die Erfindung betrifft thermoplastische Formmassen enthaltend
(A) mindestens 34 Gew.-% mindestens eines thermoplastischen Polymers ausgewählt aus (i) Polyarylenethern, (ii) Polyetherimiden, (iii) Polyarylensulfiden, (iv) Polycarbonaten mit einer Glasübergangstemperatur von mindestens 145°C, sowie Copolymere der vorgenannten Polymere (i) bis (iv),
(B) von 0,01 bis 10 Gew.-% mindestens eines organischen Schwarzpigments, welches im Bereich von 1000 nm bis 1600 nm transparent ist und eine Wärmebeständigkeit nach DIN EN 12877-1 von mindestens 300°C aufweist,
(C) von 0,01 bis 6 Gew.-% mindestens eines Entformungsmittels ausgewählt aus Fettsäuren und deren Metallsalze, Ester und Amide, und
(D) von 0 bis 50 Gew.-% ein oder mehrerer Zusatzstoffe,
wobei die Summe der Gew.-% aus (A), (B), (C) und (D) 100 Gew.-% ergibt.

Weiterhin betrifft die Erfindung ein Verfahren zur Herstellung der thermoplastischen Formmassen und die daraus erhältlichen Formteile. Schließlich betrifft die Erfindung die Verwendung der thermoplastischen Formmassen zur Verringerung der Hitzeakkumulation in Kunststoffbauteilen, Formkörpern, Folien oder Membranen.

Modernes Design einerseits und hohe Funktionsintegration andererseits führen insbesondere in der Elektro-, Elektronik- und Automobilindustrie zu immer höherer thermischer Belastung von Bauteilen oder ganzen Baugruppen durch Hitzeakkumulation.

In Bereichen hoher Temperaturbelastung kommen daher häufig sogenannte amorphe oder teilkristalline Hochtemperatur-Thermoplaste (im folgenden HT-Thermoplaste genannt) zum Einsatz. Weitläufig bekannte Beispiele für amorphe oder teilkristalline HT-Thermoplaste sind Polyarylenether, beispielsweise Polyethersulfon PESU, Polysulfon PSU, Polyphenylensulfon PPSU und Polyetherketon PEK, sowie Polyetherimid PEI, Polyphenylensulfid PPS (alle Abkürzungen gemäß DIN EN ISO 1043-1:2001) oder auch die sogenannten Hochtemperatur-Polycarbonate mit Glasübergangstemperaturen von mindestens 145°C.

Derartige HT-Thermoplaste und Blends oder Copolymere der vorgenannten Polymerklassen sind aus dem Stand der Technik bekannt.

Wärme produzieren und abgeben. Dies führt jedoch häufig infolge von Hitzeakkumulation zu Temperaturspitzen, die über die Wärmebeständigkeit des Werkstoffes hinausgehen, was beispielsweise zu einer Deformation oder einer Verschlechterung der optischen Qualität des Bauteils führen kann.

Auch die vorgenannten HT-Thermoplaste genügen oft nicht allen Anforderungen hinsichtlich thermischer Stabilität unter diesen Bedingungen. Insbesondere wenn durch aktive oder passive Kühlung eine Temperaturabsenkung in der Baugruppe nicht möglich ist und designbedingt opake, insbesondere schwarz eingefärbte Bauteile gefordert sind, versagen die vorgenannten HT-Thermoplaste, da dann auch eine Wärmeabfuhr durch Wärmestrahlung (z.B. durch Gehäusewände hindurch) unterbunden wird. Der zum Einfärben üblicherweise verwendete Ruß absorbiert die Wärmestrahlung weitestgehend und unterstützt hierdurch die Erwärmung in unerwünschter Weise.

Für solche Fälle wurden weitere Spezialpolymere wie zum Beispiel spezielle Polyetherimide, Copolyetherimide, Polyimidsulfone und Polyethersulfone entwickelt, die sich dadurch auszeichnen, dass sie sehr hohe Glasübergangstemperaturen von mehr als 225°C und somit noch höhere Wärmeformbeständigkeiten aufweisen. Beispielhaft zu nennen sind hier die in der EP 1633802, EP 1660556, EP 1670850 und EP 1518883 aufgeführten Spezialpolymere.

Diese Produkte können zwar den hohen Temperaturen widerstehen, das heißt die Gehäuseteile oder Scheinwerferreflektoren werden nicht zerstört bzw. verformen sich im Anwendungsfalle nicht. Die hohen Temperaturen in den Bauteilen bleiben jedoch bestehen, so dass diese thermisch stark belastet werden, woraus häufig eine reduzierte Lebensdauer resultiert.

Ein weiterer Nachteil der genannten Spezialpolymere ist ihre hohe Schmelzeviskosität, die sich in der Verarbeitung, insbesondere im Spritzgussprozess, nachteilig auswirkt, was zu Einschränkungen in der Verarbeitung bezüglich Wandstärke und Fließweglänge des Bauteils führt.

Die EP-A 1 541 636 offenbart thermoplastische Polymerzusammensetzungen und Formteile mit geringer Hitzeakkumulation. Die Verringerung der Hitzeakkumulation wird durch ein anorganisches Pigment mit Infrarot-reflektierenden Eigenschaften erzielt. Die offenbarten Polymerzusammensetzungen betreffen thermoplastische, kautschukmodifizierte Vinylpolymere und Polyolefine. HT-Thermoplaste werden nicht offenbart. Die thermische Stabilität der offenbarten Polymerzusammensetzungen ist für anspruchsvolle Anwendungen nicht ausreichend. Zudem ist von einem Wärmestrahlung reflektierenden Pigment keine oder nur eine unzureichende Wirksamkeit zu erwarten, wenn sich die Wärmequelle innerhalb der betreffenden Baugruppe befindet.

Die Verwendung von Perylenpigmenten in Kunststoffen ist an sich bekannt. Die CH-363151 offenbart die Verwendung von Perylenpigmentfarbstoffen zum Färben von kunststoffhaltigen Erzeugnissen. Die EP-A 1413605 und die EP-A 1413606 beschreiben schwarze Perylenpigmente und Verfahren zu ihrer Herstellung. Die Einfärbung von Kunststoffen wird erwähnt. Die darin offenbarten Perylenpigmente weisen eine hohe Temperaturbeständigkeit auf und inhibieren den Temperaturanstieg in Beschichtungen auf Basis von Polyvinylchlorid bzw. Polyethylen, was auf die hohe Reflektivität im NIR- und IR-Bereich zurückzuführen ist.

Die DE-A 10 2004 057 876 offenbart schwarze Perylenpigmente und deren Verwendung zum Einfärben von hochmolekularen organischen und anorganischen Materialien, insbesondere von Lacken, Druckfarben, Tinten, Tonern, Polymeren, Anstrichmitteln, Kunststoffartikeln und weitere Anwendungsgebiete. Die in der Anmeldungsschrift offenbarten Perylenpigmente absorbieren im gesamten sichtbaren Spektralbereich, weisen einen hohen Schwarzgrad auf und sind im NIR-Bereich transparent. Eine Prüfung der Wärmeentwicklung wird an Innenraumtemperaturen von lackierten Blechen durchgeführt, die von außen mit einer Halogenlampe bestrahlt werden. Zwar wird neben einer Vielzahl von Anwendungen auch die Möglichkeit der Einfärbung von hochmolekularen synthetischen organischen Materialien erwähnt, doch werden keine konkreten Zusammensetzungen thermoplastischer Formmassen auf Basis von HT-Thermoplasten oder deren Anwendungen in Kunststoffbauteilen und Baugruppen mit großer Wärmeabgabe offenbart. Eine verringerte Hitzeakkumulation in Innenräumen erfordert die Anwesenheit von Wärmestrahlung reflektierender Schichten oder Teilchen in Lacken oder Laminaten.

Eine Aufgabe der vorliegenden Erfindung war es daher, thermoplastische Formmassen bereit zu stellen, die eine gute Verarbeitbarkeit, insbesondere eine günstige Schmelzeviskosität aufweisen. Gleichzeitig sollte eine hohe Schwarzzahl auch unter den hohen Verarbeitungstemperaturen der HT-Thermoplaste erhalten bleiben. Eine weitere Aufgabe bestand darin, thermoplastische Formmassen bereitzustellen, die im Dauerbetrieb eine möglichst geringe Erwärmung zeigen. Hierdurch sollte es möglich werden, die in Kunststoffbauteilen erreichte Temperatur zu senken, insbesondere im Vergleich mit bekannten schwarz eingefärbten HT-Thermoplasten. Zudem sollte eine geringe Erwärmung im Dauergebrauch erzielt werden, wenn sich das Wärme ausstrahlende Bauteil im Inneren der Baugruppe befindet, welche die thermoplastische Formmasse enthält.

Gleichzeitig sollte eine schwarze Einfärbung mit hoher Schwarzzahl und eine hohe Lichtdichtigkeit, das heißt eine geringe Transparenz im sichtbaren Bereich, bei gleichzeitig geringer Pigmentkonzentration erzielt werden. Die Hitzeakkumulation kann durch höhere Pigmentkonzentrationen in unerwünschter Weise erhöht werden. Demzufolge sollte eine hohe Lichtdichtigkeit bei optimaler Pigmentkonzentration erhalten werden. Darüber hinaus sollten die thermoplastischen Formmassen eine hohe Steifigkeit und eine hohe mechanische Festigkeit sowie eine hohe Dauergebrauchstemperatur aufweisen und zudem eine hohe Hydrolysebeständigkeit zeigen. Die Ausbildung von Belägen innerhalb des Bauteils im Dauergebrauch und bei häufiger Erwärmung und Abkühlung sollte unterbleiben.

Eine weitere Aufgabe bestand darin, ein Verfahren zur Verringerung der Hitzeakkumulation in Kunststoffbauteilen aus HT-Thermoplasten bereitzustellen. Schließlich sollte ein Verfahren zur Herstellung der erfindungsgemäßen thermoplastischen Formmassen gefunden werden.

Die Aufgabe konnte gelöst werden durch Einsatz der erfindungsgemäßen Formmassen. Bevorzugte Ausführungsformen sind den Ansprüchen und der Beschreibung zu entnehmen. Kombinationen bevorzugter Ausführungsformen verlassen nicht den Rahmen dieser Erfindung.

Die thermoplastischen Formmassen enthalten erfindungsgemäß mindestens 34 Gew.-% der Komponente (A), von 0,01 bis 10 Gew.- der Komponente (B), von 0,01 bis 6 Gew.-% der Komponente (C) und von 0 bis 50 Gew.-% der Komponente (D), wobei die Summe der Gew.-% aus (A), (B), (C) und (D) 100 Gew.-% ergibt. In Betracht kommende Komponenten (A) bis (D) werden im Folgenden erläutert.

Vorzugsweise enthalten die thermoplastischen Formmassen von 50 bis 99,97 Gew.-% der Komponente (A), von 0,02 bis 6 Gew.- der Komponente (B), von 0,01 bis 6 Gew.-% der Komponente (C) und von 0 bis 38 Gew.-% der Komponente (D).

Insbesondere enthalten die thermoplastischen Formmassen von 65 bis 99,97 Gew.-% der Komponente (A), von 0,02 bis 2 Gew.- der Komponente (B), von 0,01 bis 2 Gew.-% der Komponente (C) und von 0 bis 31 Gew.-% der Komponente (D).

Besonders bevorzugt enthalten die thermoplastischen Formmassen von 70 bis 98,96 Gew.-% der Komponente (A), von 0,02 bis 2 Gew.- der Komponente (B), von 0,02 bis 1 Gew.-% der Komponente (C) und von 1 bis 27 Gew.-% der Komponente (D).

### Thermoplastische Polymere (A)

Erfindungsgemäß enthalten die thermoplastischen Formmassen als Komponente (A) mindestens 34 Gew.-% mindestens eines thermoplastischen Polymers ausgewählt aus der Gruppe bestehend aus (i) Polyarylenethern, (ii) Polyetherimiden, (iii) Polyarylensulfiden und (iv) Polycarbonaten mit einer Glasübergangstemperatur von mindestens 145°C, sowie Copolymere der vorgenannten Polymere (i) bis (iv).

Copolymere von (i) Polyarylenethern, (ii) Polyetherimiden, (iii) Polyarylensulfiden und (iv) Polycarbonaten sind dabei (i) Copolyarylenether, (ii) Copolyetherimide, (iii) Copolyarylensulfide und (iv) Copolycarbonate, die jeweils mindestens 30 Gew.-% der Monomereinheiten der entsprechenden Polymere (i) bis (iv) enthalten, wobei die zu 100 Gew.-% fehlenden Einheiten ausgewählt sind aus Monomereinheiten der jeweils anderen Polymere (i) bis (iv) und Monomereinheiten von Polyamiden. Der Begriff Copolymer umfasst auch Blockcopolymere.

Vorzugsweise enthalten die entsprechenden Copolymere von 40 bis 100 Gew.-%, vorzugsweise von 60 bis 100 Gew.-%, insbesondere 80 bis 100 Gew.-% der Monomereinheiten der Polymere (i) bis (iv), wobei die zu 100 Gew.-% fehlenden Einheiten weiterer Polymere ausgewählt aus Einheiten der Polymere (i) bis (iv). Ganz besonders bevorzugt sind die Polymere (i) bis (iv), welche zu 100 Gew.-% Monomereinheiten der jeweiligen Polymere (i) bis (iv) enthalten und keine Copolymere sind.

### Polyarylenether

In einer ersten bevorzugten Ausführungsform enthalten die erfindungsgemäßen thermoplastischen Formmassen als Komponente (A) von 34 bis 99,99 Gew.-% mindestens eines thermoplastischen Polymers ausgewählt aus Polyarylenethern und Copolyarylenethem.

Die Bezeichnungen Polysulfone, Polyethersulfone, Polyarylenether und Polyarylenethersulfone werden in der Literatur nicht immer einheitlich verwendet. Unter Polysulfon wird im allgemeinen ein Polymer verstanden, deren Wiederholungseinheit durch Sulfongruppen -SO₂- verknüpft sind. Unter Polyarylenethern werden im Rahmen der vorliegenden Erfindung sowohl Polyarylenether im engeren Sinn, als auch Polyarylenethersulfide, Polyarylenethersulfone und Polyarylenetherketone zusammengefasst.

Deren Arylengruppen können gleich oder verschieden sein und unabhängig voneinander einen aromatischen Rest mit 6 bis 18 C-Atomen bedeuten und sind vorzugsweise ausschließlich para-verknüpft. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Diese können neben -O-, z.B. über -S-, -SO-, -SO₂-, -CO-, -N=N-, -COO-, einen Alkylenrest oder eine chemische Bindung miteinander verknüpft sein. In den Polyarylenethern können die Arylengruppen auch über unterschiedliche Gruppen miteinander verknüpft sein.

Zu den bevorzugten Polyarylenethern zählen solche mit wiederkehrenden Einheiten der allgemeinen Formel I

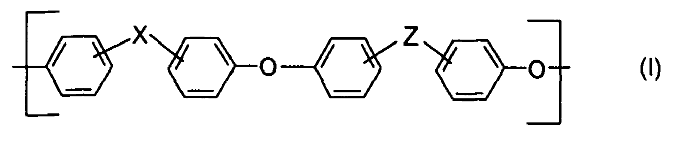

Ebenso können deren kernsubstituierten Derivate verwendet werden. Als Substituenten kommen vorzugsweise C₁-C₆-Alkyl, wie Methyl, Ethyl oder t-Butyl, C₁-C₆-Alkoxy, wie Methoxy oder Ethoxy, Aryl, insbesondere Phenyl, Chlor oder Fluor in Betracht. Die Variable X kann -SO₂-, -SO-, -S-, -O-, CO, -N=N-, -RC=CR^{a}-, -CR^{b}R^{c}- oder eine chemische Bindung sein. Die Variable Z kann für -SO₂-, -SO-, -CO-, -O-, -N=N- oder -RC=CR^{a} stehen. Hierbei stellen R und R^{a} jeweils Wasserstoff, C₁-C₆-Alkyl, z.B. Methyl, n-Propyl oder n-Hexyl, C₁-C₆-Alkoxy, darunter Methoxy, Ethoxy oder Butoxy oder Aryl, insbesondere Phenyl dar. Die Reste R^{b} und R^{c} können jeweils Wasserstoff oder eine C₁- bis C₆-Alkylgruppe, insbesondere Methyl, darstellen. Sie können aber auch zu einem C₄- bis C₁₀-Cycloalkylring, bevorzugt Cyclopentyl- oder Cyclohexylring, miteinander verknüpft sein, der seinerseits mit einer oder mehreren Alkylgruppen, vorzugsweise Methyl substituiert sein kann. Daneben können R^{b} und R^{c} auch eine C₁- bis C₆-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Im folgenden sind einige der bevorzugten wiederkehrenden Einheiten I aufgeführt:

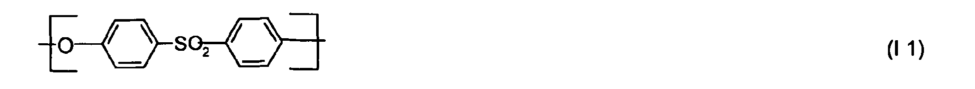

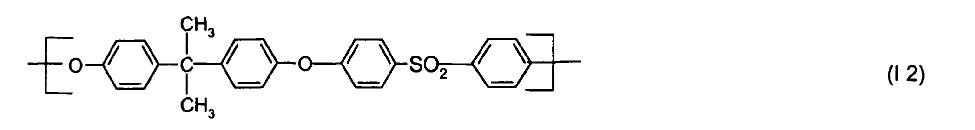

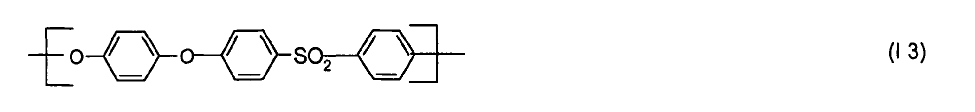

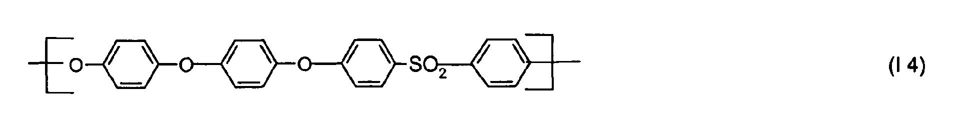

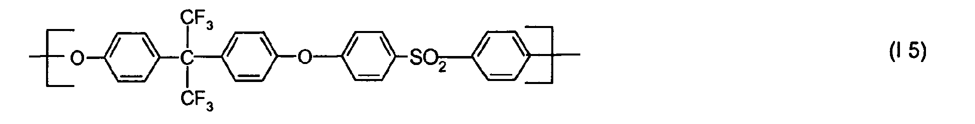

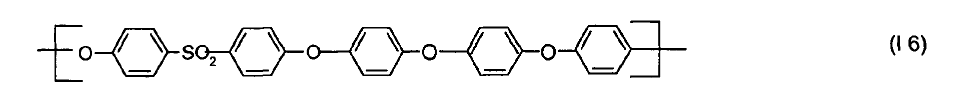

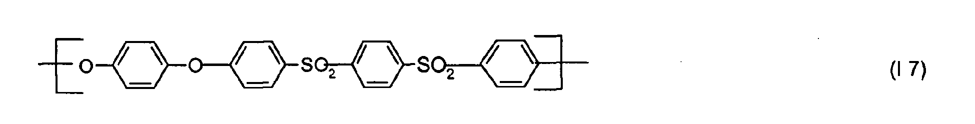

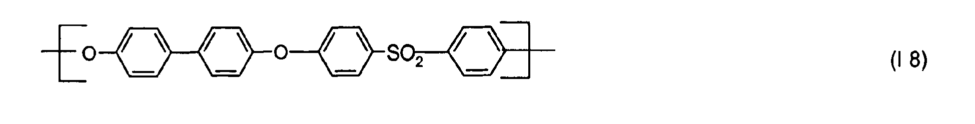

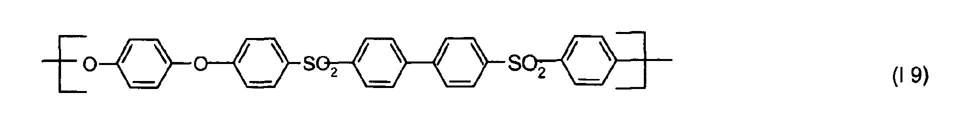

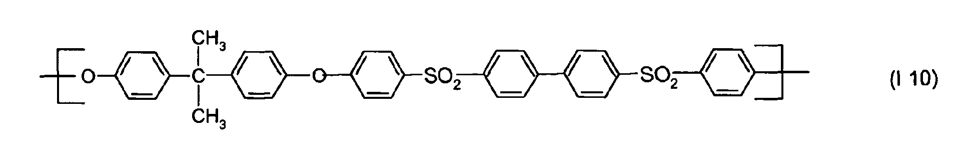

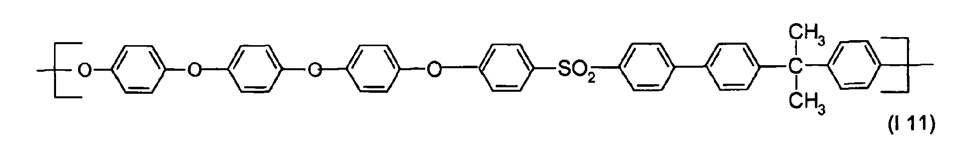

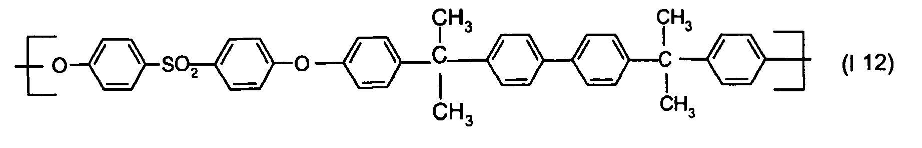

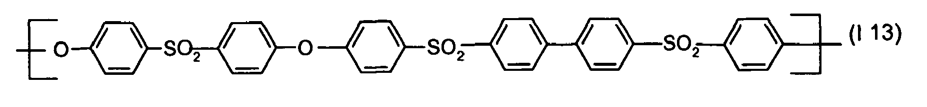

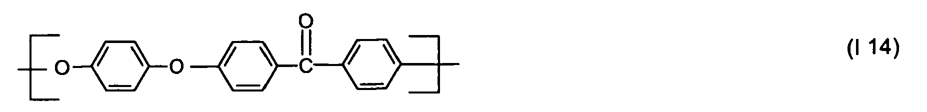

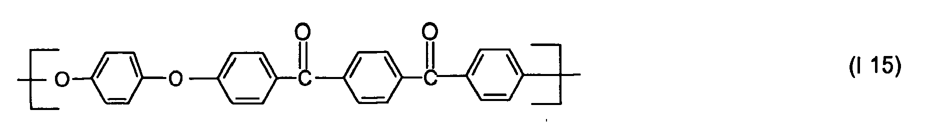

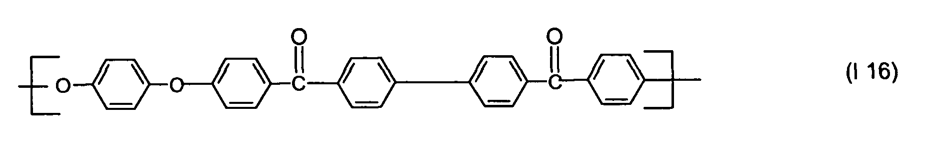

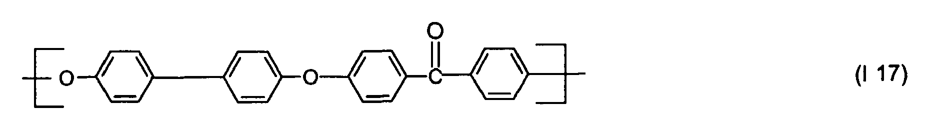

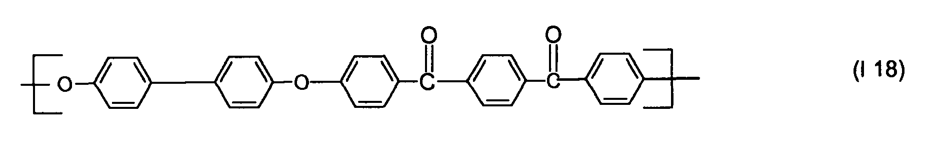

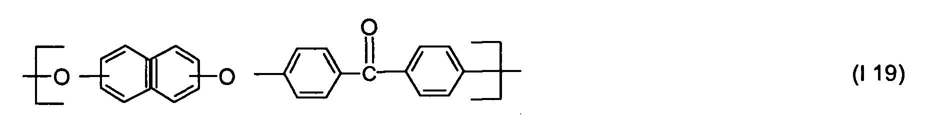

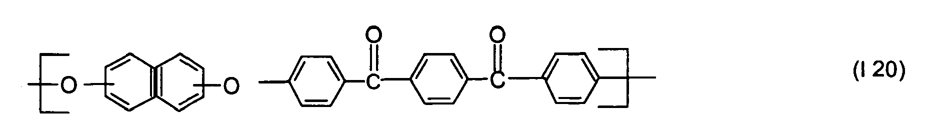

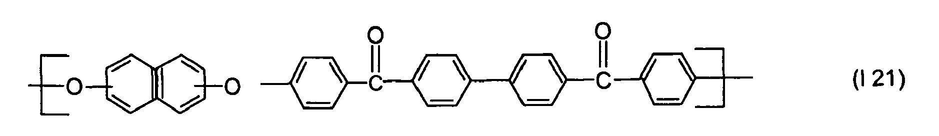

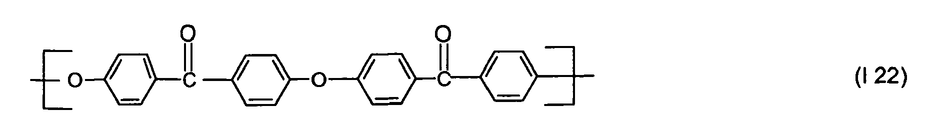

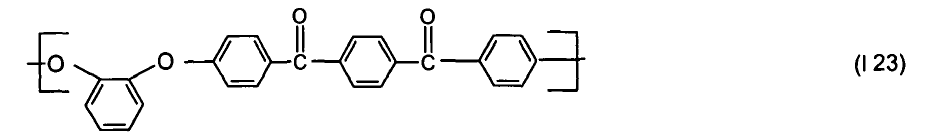

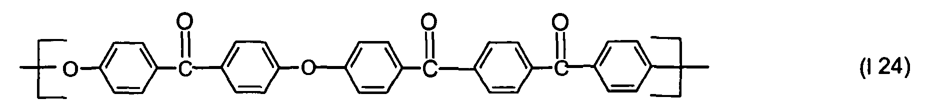

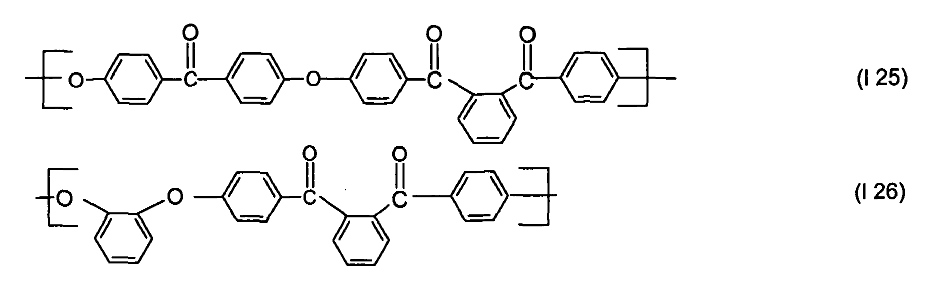

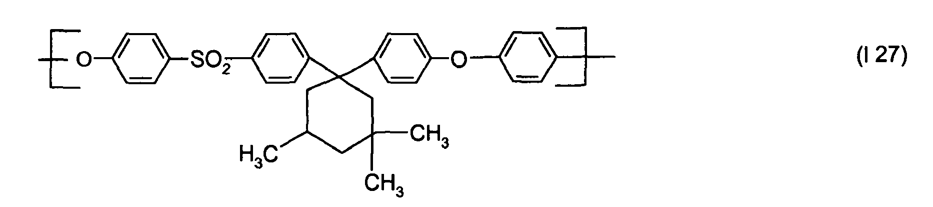

Ganz besonders werden Polyarylenether bevorzugt, die als wiederkehrende Einheiten (I₁), (I₂), (I₈), (I₂₄) oder (I₂₅) enthalten. Dazu zählen beispielsweise Polyarylenethersulfone, die von 0 bis 100 mol-%, bevorzugt von 5 bis 95 mol-% Struktureinheiten (I₁) und von 0 bis 100 mol-%, bevorzugt von 5 bis 95 mol-% Struktureinheiten (I₂) enthalten.

Die Polyarylenether können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte der Blöcke- bzw. der Pfropfarme in den Copolymeren liegt in der Regel im Bereich von 1 000 bis 30 000 g/mol. Die Blöcke unterschiedlicher Struktur können alternierend oder statistisch angeordnet sein. Der Gewichtsanteil der Polyarylenethersegmente in den Co- oder Blockcopolymeren beträgt im allgemeinen mindestens 3, vorzugsweise mindestens 10 Gew.-%. Der Gewichtsanteil der Polyarylenethersulfone oder -ketone kann bis zu 97 Gew.-% betragen. Bevorzugt werden Co- oder Blockcopolymere mit einem Gewichtsanteil an Polyarylenethersegmenten mit bis zu 90 Gew.-%. Besonders bevorzugt werden Co- oder Blockcopolymere mit 20 bis 80 Gew.-% Polyarylenethersegmenten.

Im allgemeinen weisen die Polyarylenether mittlere Molekulargewichte Mₙ (Zahlenmittel) im Bereich von 10 000 bis 60 000 g/mol und Viskositätszahlen von 30 bis 150 ml/g auf. Die Viskositätszahlen werden je nach Löslichkeit der Polyarylenether entweder in 1 gew.-%iger N-Methylpyrrolidon-Lösung, in Mischungen aus Phenol und o-Dichlorbenzol oder in 96 %iger Schwefelsäure bei jeweils 20°C bzw. 25°C gemessen.

Die Polyarylenether sind an sich bekannt oder können nach an sich bekannten Methoden hergestellt werden.

So lassen sich beispielsweise Polyphenylenether durch oxidative Kupplung von Phenolen herstellen. Polyarylenethersulfone oder -ketone entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden.

Bevorzugt werden die Monomeren in der Schmelze oder in einem inerten hochsiedenden Lösungsmittel durchgeführt. Zu diesen zählen Chlorbenzol, Dichlorbenzol, Xylol und Trichlorbenzol. Daneben kommen Sulfone oder Sulfoxide, darunter vor allem Dimethylsulfon, Diethylsulfon, 1,1-Dioxotetrahydrothiophen (Sulfolan) oder Diphenylsulfon, Dimethylsulfoxid oder Diethylsulfoxid, bevorzugt Dimethylsulfoxid, in Betracht. Zu den bevorzugten Lösungsmitteln zählen auch N-Alkylpyrrolidone, insbesondere N-Methylpyrrolidon. Weiterhin können N-substituierte Säureamide, beispielsweise N,N-Dimethylformamid oder N,N-Dimethylacetamid eingesetzt werden. Es ist auch möglich, Mischungen unterschiedlicher Lösungsmittel zu verwenden.

Bevorzugte Verfahrensbedingungen zur Synthese von Polyarylenethersulfonen oder - ketonen sind beispielsweise in der EP-A-113 112 und 135130 beschrieben.

Die bevorzugten Polyarylenether weisen in der Regel einen Schmelzpunkt von mindestens 320°C (Polyarylenethersulfone) bzw. von mindestens 370°C (Polyarylenetherketone) auf.

Als Komponente (A) kommen auch Polyarylenethersulfone oder -ketone in Betracht, die durch Umsetzen eines Polyarylenethersulfons oder -ketons mit einer reaktiven Verbindung erhältlich sind. Die reaktiven Verbindungen enthalten neben einer C,C-Doppel- oder Dreifachbindung eine bzw. mehrere Carbonyl-, Carbonsäure-, Carboxylat-, Säureanhydrid-, Säureimid-, Carbonsäureester-, Amino-, Hydroxyl-, Epoxi-, Oxazolin-, Urethan-, Harnstoff-, Lactam- oder Halogenbenzylgruppe.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁-C₁₈-Alkanolen, die Mono- oder Diamide dieser Säuren wie N-Phenylmaleinimid, Maleinsäurehydrazid.

Bevorzugt werden α, β-ungesättigte Dicarbonsäuren bzw. deren Anhydride, Di-Ester und Mono-Ester der nachstehenden allgemeinen Struktur II und III verwendet. 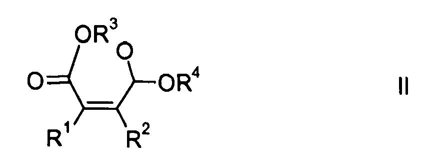 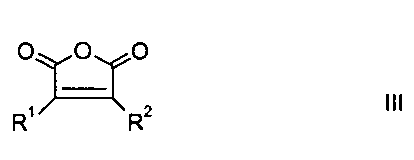 wobei
R¹, R², R³ und R⁴ unabhängig voneinander Wasserstoff sowie C₁-C₁₈-Alkyl-Gruppen sein können.

Besonders geeignete Verbindungen sind Maleinsäureanhydrid, Fumarsäure und Itaconsäure.

Die Polymere und die reaktive Verbindung können z.B. in einem aromatischen Lösungsmittel miteinander umgesetzt werden. Als besonders geeignete Lösungsmittel haben sich Chlorbenzol, o-Dichlorbenzol und N-Methylpyrrolidon erwiesen. Dabei wird im allgemeinen ein üblicher Radikalinitiator eingesetzt. Die Umsetzung wird im allgemeinen bei 75 bis 150°C ausgeführt. Das Reaktionsprodukt wird durch Fällung mit einem üblichen Fällungsmittel, wie niedermolekularer Alkohol und Keton, oder durch Entfernen des Lösungsmittels (z.B. im Entgasungsextruder, Dünnschichtverdampfer), gewonnen.

Die Reaktionsteilnehmer können aber beispielsweise auch bei einer Temperatur von 270 - 350°C in der Schmelze in einem kontinuierlich oder absatzweise arbeitenden Mischaggregat (z.B. Ein- oder Zweiwellenextruder, Kneter) umgesetzt, werden.

Die reaktive Verbindung wird dabei vorzugsweise in flüssiger Form, insbesondere innerhalb der Knetzone eines Mischaggregats zur Schmelze des Polymeren zudosiert.

Vorzugsweise ist die Komponente (A) ein modifiziertes Polyarylenethersulfon oder -keton, das durch Umsetzen von 80 bis 99,9 Gew.-%, insbesondere von 90 bis 99 Gew.-% des unmodifizierten Polyarylenethersulfons oder -ketons, mit von 0,1 bis 20 Gew.-%, insbesondere von 1 bis 10 Gew.-% der reaktiven Verbindung erhalten worden ist.

Besonders bevorzugt werden als Komponente (A) mit von 0,1 bis 1,5 Gew.-% Maleinsäureanhydrid gepfropfte Polyarylenethersulfone. Dabei werden Polyarylenethersulfone, enthaltend von 5 bis 95 mol-% Einheiten I₁ und von 5 bis 95 mol-% Einheiten I₂ bevorzugt.

Polyarylenethersulfone mit von 80 bis 95 mol-%, vorzugsweise von 85 bis 95 mol-% Einheiten der Formel I₂ und I₁ und entsprechend von 5 bis 20 mol-%, vorzugsweise von 5 bis 15 mol-% Einheiten der Formel I₁ bzw. I₂ seien hier insbesondere erwähnt.

Als Radikalstarter können in der Regel die in der Fachliteratur (z.B. J.K. Kochi, "Free Radicals", J. Wiley, New York, 1973) beschriebenen Verbindungen Verwendung finden.

Üblicherweise werden die Radikalstarter in Mengen von etwa 0,01 bis etwa 1 Gew.-%, bezogen auf die eingesetzten Polyarylenethersulfone oder -ketone verwendet. Selbstverständlich können auch Mischungen unterschiedlicher Radikalstarter eingesetzt werden.

Entsprechend modifizierte Polyphenylenether sind u.a. aus der WO 87/00540 bekannt.

Der Gewichtsanteil an thermoplastischen Polymeren (A) in der thermoplastischen Formmasse liegt im allgemeinen im Bereich von 34 bis 99,99 Gew.-%, vorzugsweise 50 bis 99,97 Gew.-%, insbesondere von 65 bis 99,97 Gew.-% und besonders bevorzugt von 70 bis 98,96 Gew.-%.

Polyarylenether sind als thermoplastisches Polymer (A) besonders bevorzugt. Ganz besonders bevorzugt sind Polyarylenether mit Sulfongruppen (Polyarylenethersulfone).

Besonders bevorzugte Vertreter der Klasse der Polyarylenethersulfone sind insbesondere
- Bisphenol-A-Polysulfon (CAS Registry Number® 25135-51-7), welches gemäß ISO 1043 als Polysulfon (PSU) bezeichnet wird,
- Poly(oxy-1,4-phenylensulfonyl-1,4-phenylene) mit der CAS Registry Number® 25667-42-9, welches gemäß ISO 1043 als Polyethersulfon (PESU) bezeichnet wird,
- Polyphenylensulfon (PPSU) mit der Struktur Poly(oxy-1,4-phenylenesulfonyl-1,4-phenyleneoxy-1,4-phenylene-1,4-phenylene).

### Polyetherimide

In einer weiteren bevorzugten Ausführungsform enthalten die erfindungsgemäßen thermoplastischen Formmassen als Komponente (A) von 34 bis 99,99 Gew.-% mindestens eines thermoplastischen Polymers ausgewählt aus Polyetherimiden und Copolyether-imiden.

Als Polyetherimide können im Prinzip sowohl aliphatische als auch aromatische Polyetherimide verwendet werden. Ebenso kommen Polyetherimide in Betracht, die sowohl aliphatische als auch aromatische Gruppen in der Hauptkette enthalten. Beispielsweise können Polyetherimide, die wiederkehrende Einheiten der allgemeinen Formel IV oder der Formel IVₐ 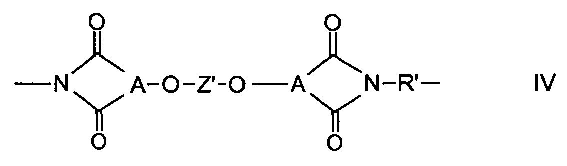 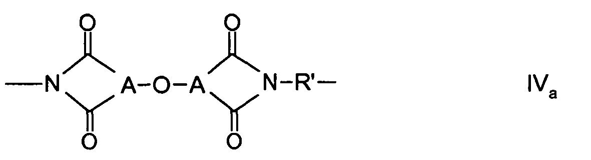 enthalten, als Komponente (A) in Betracht, wobei A insbesondere ausgewählt ist aus 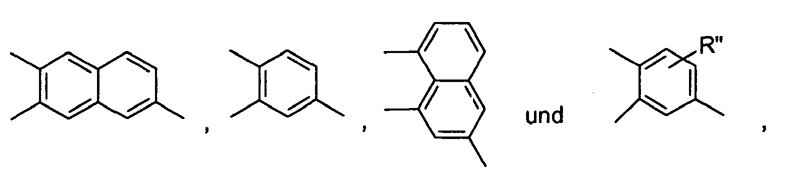 und wobei Z' und R' gleich oder unabhängig voneinander und verschieden sein können. Z' und R' können z.B. eine C₁- bis C₃₀-Alkylengruppe bedeuten. Die Alkylengruppe kann sowohl linear als auch verzweigt oder auch zu einem Ring geschlossen sein. Darunter seien Methylen, Ethylen, n-Propylen, i-Propylen, Cyclohexylen oder n-Decylen genannt. Z' und R' können aber auch für einen C₇ - bis C₃₀-Alkylarylenrest stehen. Beispiele hierfür sind Diphenylenmethan, Diphenylenethan oder 2,2-Diphenylenpropan. Ferner können Z' und R' einen C₆ - bis C₁₈-Arylenrest wie Phenylen, Diphenylsulfon oder Biphenylen bedeuten. Die vorgenannten Gruppen können ihrerseits mit einem oder mehreren Substituenten substituiert, oder durch Heteroatome bzw. - gruppen, unterbrochen sein. Besonders bevorzugte Substituenten sind Halogenatome, bevorzugt Chlor oder Brom oder C₁ - bis C₁₀-Alkylreste, insbesondere Methyl oder Ethyl. Zu den bevorzugten Heteroatomen, bzw. -gruppen, zählen -SO₂-, -O- oder -S-. Im folgenden sind beispielhaft einige geeignete Reste Z' und R' aufgeführt: 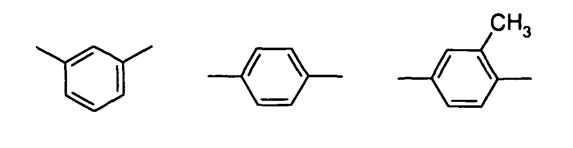 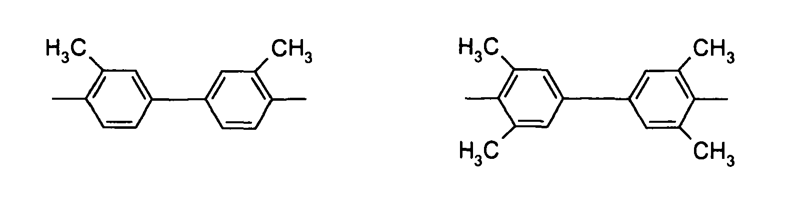 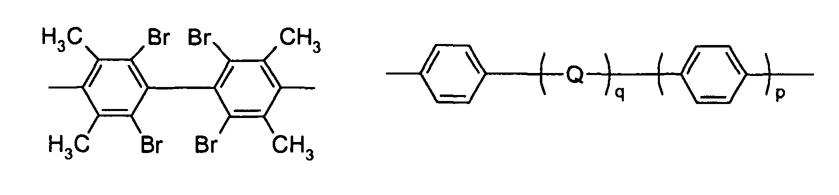 worin Q insbesondere -C_{y}H_{2y-,} -CO-, -SO₂-, -O- oder -S- bedeuten kann. Die Variable q ist 0 oder 1, p ist 0 oder 1 und y ist eine ganze Zahl von 1 bis 5.

R" kann C₁- bis C₁₀-alkyl oder C₁- bis C₁₀-Alkoxy bedeuten. Als Komponente (A) sind Polyetherimide, die wiederkehrende Einheiten der allgemeinen Formel V 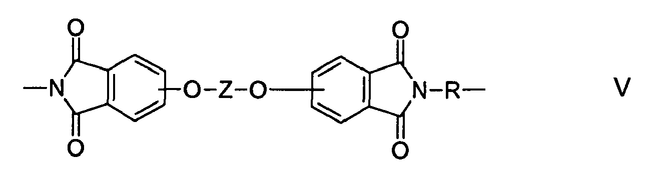 enthalten, bevorzugt, worin Z und R die gleiche Bedeutung haben wie Z' und R'.

Als Komponente (A) besonders bevorzugte Polyetherimide enthalten wiederkehrende Einheiten, in denen Z 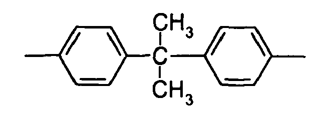 bedeutet und R ausgewählt ist aus 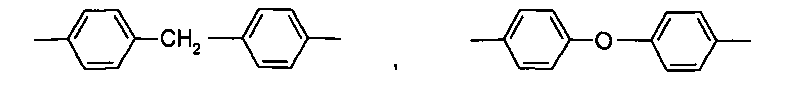 und

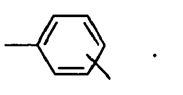

Ganz besonders bevorzugte Polyetherimide enthalten wiederkehrende Einheiten der Formel VI₁:

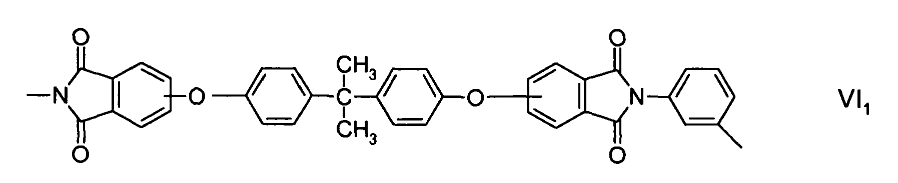

Die Polyetherimide als Komponente (A) weisen im Allgemeinen mittlere Molekulargewichte (Zahlenmittelwert Mₙ) von 5000 bis 50 000 g/mol, bevorzugt von 8000 bis 40 000 g/mol auf. Derartige Polyetherimide sind bekannt oder sind nach bekannten Methoden erhältlich.

So können entsprechende Dianhydride mit entsprechenden Diaminen zu den Polyetherimiden umgesetzt werden. In der Regel findet diese Umsetzung in Substanz oder in einem inerten Lösungsmittel bei Temperaturen von 100 bis 250°C statt. Als Lösungsmittel eignen sich vor allem o-Dichlorbenzol oder m-Cresol. Ebenso können die Polyetherimide in der Schmelze bei Temperaturen von 200 bis 400°C, bevorzugt von 230 bis 300°C hergestellt werden. Zur Herstellung der Polyetherimide werden im allgemeinen die Dianhydride mit den Diaminen im äquimoleren Verhältnis umgesetzt. Gewisse molare Überschüsse, z.B. von 0,1 bis 5 mol-% an Dianhydrid oder Diamin, sind jedoch möglich.

### Polyarylensulfide

In einer weiteren bevorzugten Ausführungsform enthalten die erfindungsgemäßen thermoplastischen Formmassen als Komponente (A) von 34 bis 99,99 Gew.-% mindestens eines thermoplastischen Polymers ausgewählt aus Polyarylensulfiden und Copolyarylensulfiden.

Als Komponente (A) kommen prinzipiell alle Polyarylensulfide in Betracht. Bevorzugt werden Polyarylensulfide, die mehr als 30 mol-%, insbesondere mehr als 70 mol-% wiederkehrende Einheiten VII: 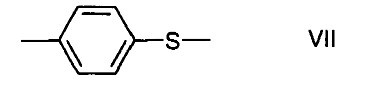 enthalten. Als weitere wiederkehrende Einheiten sind beispielsweise 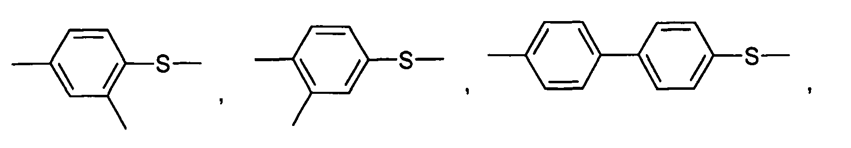 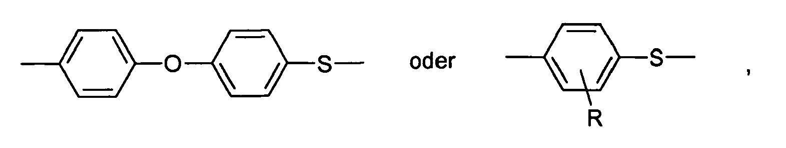 worin R C₁₋₁₀-Alkyl, bevorzugt Methyl und n entweder 1 oder 2 bedeutet, zu nennen. Die Polyarylenethersulfide können sowohl statistische Copolymere als auch Blockcopolymere sein. Ganz besonders bevorzugte Polyphenylensulfide enthalten 100 mol-% Einheiten der allgemeinen Formel (VII).

Als Endgruppen kommen z.B. Halogen, Thiol oder Hydroxy, bevorzugt Halogen in Betracht.

Die Polyarylensulfide können verzweigt oder unverzweigt sein. Die bevorzugten Polyarylensulfide weisen Molgewichte von 1.000 bis 1.000.000 g/mol auf.

Polyarylensulfide sind an sich bekannt oder nach bekannten Methoden erhältlich. Beispielsweise können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. aus der US 3,354,129 zu entnehmen ist. Weitere Verfahren sind in US 3,699,087, US 4,645,826 und J.P. Critchley et al., "Heat Resistant Polymers", Seiten 151 bis 160 (1983), Plenum Press, New York, beschrieben.

### Polycarbonate

In einer weiteren bevorzugten Ausführungsform enthalten die erfindungsgemäßen thermoplastischen Formmassen als Komponente (A) von 34 bis 99,99 Gew.-% mindestens eines thermoplastischen Polymers ausgewählt aus Polycarbonaten und Copolycarbonaten mit einer Glasübergangstemperatur von mindestens 145°C, vorzugsweise mindestens 160°C, insbesondere mindestens 180°C.

Geeignete Polycarbonate sind beispielsweise solche auf Basis von Diphenolen der allgemeinen Formel VIII 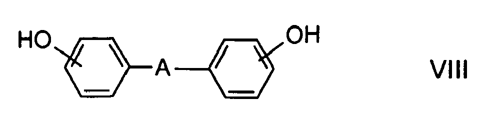 worin A eine Einfachbindung, eine C₁- bis C₃-Alkylen-, eine C₂- bis C₃-Alkyliden-, eine C₃- bis C₆-Cycloalkylidengruppe, sowie -S- oder -SO₂- bedeutet.

Bevorzugte Diphenole der Formel V sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan (Bisphenol A) und 1,1-Bis-(4-hydroxyphenyl)-cyclohexan. Zu den bevorzugten Diphenolen zählen aber auch unsubstituierte oder substituierte Cyclohexylbisphenole. Darunter ist das Trimethylcyclohexylbisphenol A der Formel (IX) 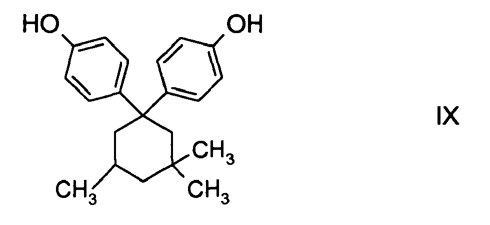 besonders bevorzugt.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Weiterhin können die als Komponente A geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Besonders bevorzugt werden Polycarbonate eingesetzt, die relative Viskositäten ηᵣₑₗ von 1,10 bis 1,50, insbesondere von 1,25 bis 1,40 (jeweils gemessen in 0,5 gew.-%iger Lösung in Dichlormethan) aufweisen. Dies entspricht mittleren Molekulargewichten M_{w} (Gewichtsmittelwert) von 10 000 bis 200 000, vorzugsweise von 20 000 bis 80 000.

Die Diphenole der allgemeinen Formel VIII und IX sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Weitere geeignete Polycarbonate sind solche auf Basis von Hydrochinon oder Resorcin.

### Organische Schwarzpigmente (B)

Erfindungsgemäß enthalten die thermoplastischen Formmassen von 0,01 bis 10 Gew.-% mindestens eines organischen Schwarzpigments, welches im Bereich von 1000 nm bis 1600 nm transparent ist und eine Wärmebeständigkeit nach DIN EN 12877-1 von mindestens 300°C aufweist

Im Wellenlängenbereich von 1000 bis 1600 nm transparent bedeutet im Rahmen der vorliegenden Erfindung, dass bei einer Konzentration von 0,0625 Gew.-% von homogen eingearbeitetem organischem Schwarzpigment (B) in einem Polyvinylchloridfilm (PVC-Film) im genannten Wellenlängenbereich die Verringerung der Transmission im Vergleich zu einem ansonsten identischen PVC-Film gleicher Dicke, jedoch ohne Schwarzpigment (B) - im folgenden Standard genannt - höchstens 20 %, bevorzugt höchstens 15 %, besonders bevorzugt höchstens 10%, ausgehend von der Transmission des Standards beträgt. Beispielsweise, sofern die Transmission im genannten Wellenlängenbereich des Standards bei einer bestimmten Wellenlänge 90 % beträgt, resultiert in diesem Zahlenbeispiel eine Transmission im ansonsten identischen PVC-Film enthaltend 0,0625 Gew.-% des Schwarzpigments (B) von mindestens 70 %, bevorzugt mindestens 75 %, besonders bevorzugt mindestens 80 %.

Vorzugsweise bedeutet transparent im Wellenlängenbereich von 1000 bis 1600 nm, dass die Transmission eines Polymerfilms der Dicke 1 mm, in den 0,05 g des organischen Schwarzpigments (B) pro 80 g Polyvinylchlorid homogen eingearbeitet wurden, im genannten Wellenlängenbereich im Mittel mindestens 65 %, bevorzugt mindestens 70 %, insbesondere mindestens 75 % beträgt.

Die Transmission wird bestimmt, indem mittels eines NIR-Spektrometers mit großer Ulbrichtkugel zur integralen Strahlungserfassung in diffuser Transmission ein Transmissionsspektrum im genannten Wellenlängenbereich aufgenommen wird. Die entsprechenden Messverfahren einschließlich der notwendigen Kalibrierung sind dem Fachmann hinreichend bekannt.

Um den Mittelwert zu bestimmen, wird im genannten Wellenlängenbereich alle 2 nm ein Wert für die Transmission bestimmt und zur Ermittlung des Mittelwertes zahlengewichtet.

Die Herstellung des Prüfkörpers erfolgt dabei vorzugsweise durch Zugabe von 0,05 g des Schwarzpigments (B) zu 80 g Polyvinylchlorid und anschließende Homogenisierung auf einem Turbula-Mischer sowie daran anschließende Auswalzung auf einem Walzwerk bei 150°C. Anschließend werden 4 so erhaltene Walzfelle übereinander gestapelt und zwischen zwei auf 145°C vorgeheizten Metallplatten zu einem Walzfellpaket der Dicke 1 mm gepresst.

Vorzugsweise liegt die sogenannte Absorptionskante, das heißt der Wert, an dem die Transmission 50% in einem so hergestellten Prüfkörper der Dicke 1 mm und einer Konzentration des Schwarzpigments (B) von 0,0625 Gew.-% im PVC-Film beträgt im Wellenlängenbereich von 700 bis 950 nm, bevorzugt von 750 bis 900 nm, insbesondere von 760 nm bis 850 nm.

In einer bevorzugten Ausführungsform enthalten die thermoplastischen Formmassen organische Schwarzpigmente, die eines der Isomere der Formel P-Ia oder P-Ib enthalten oder eine Mischung beider Isomere: 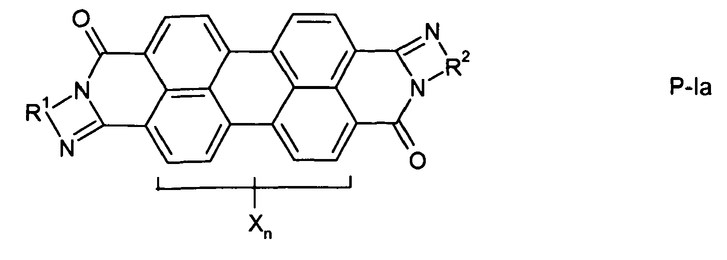 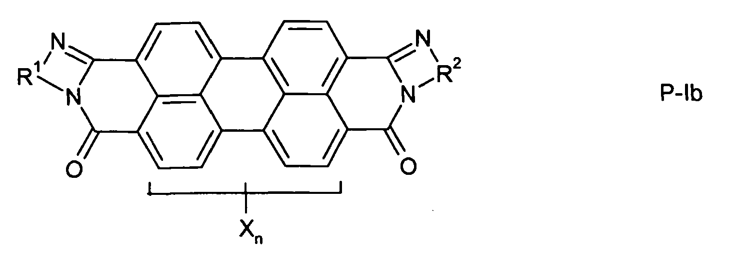 wobei die Variablen in P-Ia und P-Ib folgende Bedeutung haben: R¹, R² sind unabhängig voneinander Phenylen, Naphthylen oder Pyridylen, das jeweils ein- oder mehrfach durch C₁-C₁₂-Alkyl, insbesondere C₁-C₄-Alkyl, C₁-C₆-Alkoxy, insbesondere C₁-C₄-Alkoxy, Hydroxy, Nitro und/oder Halogen, insbesondere Chlor oder Brom, substituiert sein kann. Vorzugsweise sind R¹ und R² unabhängig voneinander Phenylen oder Naphthylen, das jeweils vorzugsweise unsubstituiert ist. X ist Halogen, insbesondere Chlor oder Brom, und die Zahl n beträgt von 0 bis 4.

In einer besonders bevorzugten Ausführungsform enthalten die erfindungsgemäßen thermoplastischen Formmassen als Komponente (B) von 0,01 bis 10 Gew.-% mindestens eines der Isomere P-Ia' oder P-Ib': 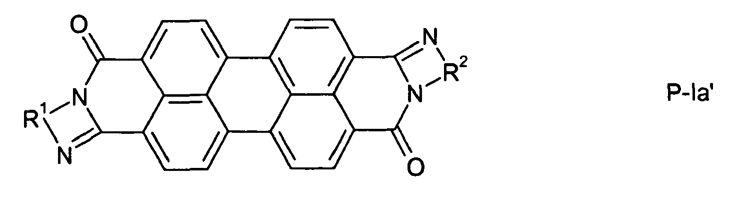 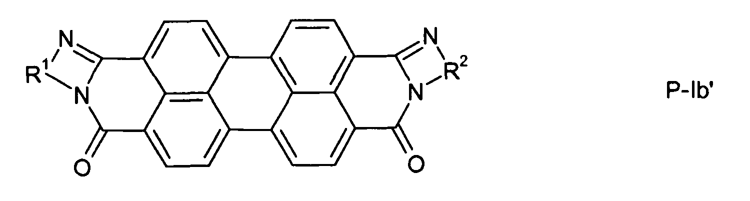 wobei die Variablen in P-Ia' und P-Ib' folgende Bedeutung haben: R¹, R² sind unabhängig voneinander Phenylen, Naphthylen oder Pyridylen, das jeweils ein- oder mehrfach durch C₁-C₁₂-Alkyl, insbesondere C₁-C₄-Alkyl, C₁-C₆-Alkoxy, insbesondere C₁-C₄-Alkoxy, Hydroxy, Nitro und/oder Halogen, insbesondere Chlor oder Brom, substituiert sein kann.

Bevorzugt sind die Phenylen-, Naphthylen- und Pyridylenreste in R¹ und R² gemäß P-Ia, P-Ib, P-Ia' und P-Ib' jedoch unsubstituiert, wobei die Phenylen- und Naphthylenreste bevorzugt und die Naphthylenreste besonders bevorzugt sind. Ganz besonders bevorzugt ist R¹ = R² = Phenylen und R¹ = R² = Naphthylen, wobei letzteres ganz besonders bevorzugt ist.

Der Begriff "Mischung" soll dabei physikalische Mischungen wie auch bevorzugt feste Lösungen (Mischkristalle) der Verbindungen P-Ia und P-Ib bzw. P-Ia' und P-Ib' umfassen.

Die eingesetzten organischen Schwarzpigmente (B) absorbieren im gesamten sichtbaren Spektralbereich und zeichnen sich vorzugsweise durch einen hohen Schwarzgrad auf. Vorzugsweise weist das organische Schwarzpigment (B) eine Schwarzzahl von mindestens 210 in einem Alkyd/Melamin-Einbrennlack auf, insbesondere mindestens 230. Dementsprechend ergeben die eingesetzten organischen Schwarzpigmente (B) vorzugsweise tiefschwarze, neutrale Purtonfärbungen. In der Weißaufhellung werden neutrale Grautöne (z.B. Perylenpigmente P-Ia/P-Ib mit R¹ = R² = Naphthylen) bis leicht bis deutlich blaustichige Färbungen (z.B. Perylenpigmente P-Ia/P-Ib mit R¹ = R² = Phenylen) erhalten.

Zur Bestimmung der Schwarzzahl wird eine Mischung von jeweils 1,0 g des jeweiligen Pigments und 9,0 g eines Alkyd/Melamin-Einbrennlacks (Bindemittelgehalt von 43 Gew.-%, mit Xylol auf 35 Gew.-% eingestellt) mit 10 ml Glasperlen (Durchmesser 3 mm) in einer 30 ml-Glasflasche 60 min auf einem Skandex-Dispergieraggregat geschüttelt. Die erhaltene Paste wird anschließend als 150 µm dicke Schicht auf einen Karton aufgetragen, abgelüftet und 30 min bei 130°C eingebrannt. Nach farbmetrischer Auswertung mit einem Spektralphotometer, vorzugsweise einem Spectraflash SF 600 plus der Firma Datacolor, wird die Schwarzzahl nach der folgenden Formel aus dem Normfarbwert Y berechnet: Schwarzzahl = 100 x log (100/Y).

Die organischen Schwarzpigmente (B) weisen in der Regel eine Primärteilchengröße ≤ 800 nm, bevorzugt ≤ 500 nm, besonders bevorzugt ≤ 200 nm, auf und sind dispergierweich, d.h. sie weisen z. B. bei der Kunststoffeinfärbung eine Dispergierhärte DH < 5 gemäß DIN 53775, Blatt 7, auf.

Die Herstellung der schwarzen Perylenpigmente ist bekannt und beispielsweise in der WO-2005/078023 auf Seite 5, Zeile 11 bis Seite 14, Zeile 31 beschrieben.

### Entformungsmittel (C)

Die üblicherweise in Thermoplasten eingesetzten, dem Fachmann bekannten Entformungs- und/oder Gleitmittel können in den erfindungsgemäßen thermoplastischen Formmassen nur bedingt eingesetzt werden. Geeignete Entformungsmittel (C) sind solche, welche die unter den Verarbeitungsbedingungen erforderliche Temperaturbeständigkeit und Schmelzestabilität aufweisen.

Erfindungsgemäß enthalten die thermoplastischen Formmassen als Komponente (C) von 0,01 bis 6 Gew.-% mindestens eines Entformungsmittels ausgewählt aus der Gruppe der Verbindungen bestehend aus Fettsäuren und deren Metallsalze, Ester und Amide.

Vorzugsweise enthalten die erfindungsgemäßen thermoplastischen Formmassen als Komponente (C) von 0,02 bis 2 Gew.-% mindestens eines Entformungsmittels ausgewählt aus der Gruppe der Verbindungen bestehend aus Fettsäuren und Metallsalzen, Estern und Amiden von Fettsäuren.

Besonders bevorzugt ist das mindestens eine Entformungsmittel ausgewählt aus der Gruppe der Verbindungen bestehend aus Fettsäuren und Metallsalzen von Fettsäuren, ganz besonders bevorzugt ausgewählt aus Stearinsäure und den Metallsalzen der Stearinsäure.

Sofern als Entformungsmittel (C) Metallsalze von Fettsäuren zum Einsatz kommen, dann sind Aluminium- und Zinksalze bevorzugt. Die handelsüblichen Stearinsäuren, wie z. B. die unter CAS-Nr. 57-11-4 gehandelten, können dabei bis zu 35% anderer Fettsäuren enthalten.

Sofern als Komponente (A) ein Polyarylenether eingesetzt wird, dann ist Stearinsäure als Entformungsmittel (C) besonders bevorzugt.

### Zusatzstoffe (D)

Erfindungsgemäß können die thermoplastischen Formmassen von 0 bis 50 Gew.-%, vorzugsweise von 0 bis 38 Gew.-%, besonders bevorzugt von 0 bis 31 Gew.-%, insbesondere von 0 bis 27 Gew.-% eines oder mehrerer Zusatzstoffe enthalten.

Als Zusatzstoffe (D) kommen insbesondere Antioxidantien, UV-Stabilisatoren, Thermostabilisatoren, Flammschutzmittel, Fließverbesserer, Dispergierhilfsmittel und Verstärkungsmittel in Betracht. Derartige Zusatzstoffe sind dem Fachmann grundsätzlich bekannt. Der Fachmann wählt Zusatzstoffe (D) so aus, dass diese unter den Verarbeitungsbedingungen ausreichend stabil sind und außerdem keine signifikante Absorption im Wellenlängenbereich des nahen Infrarots zeigen.

Der Fachmann wählt aus den in Betracht kommenden Verbindungen vorzugsweise solche Zusatzstoffe (D) aus, die im Wellenlängenbereich von 1000 nm bis 1600 nm im wesentlichen keine Absorption aufweisen. In Betracht kommen hierbei insbesondere solche Zusatzstoffe (D), die gegenüber Wärmestrahlung transparent sind oder solche, die im genannten Wellenlängenbereich stark reflektierende Eigenschaften aufweisen. Es kommen insbesondere solche Zusatzstoffe (D) in Betracht, welche darüber hinaus unter den Verarbeitungsbedingungen stabil sind und die Polymerschmelze nicht negativ beeinflussen.

Als Zusatzstoff (D) bevorzugt sind für Wärmestrahlung durchlässige Verstärkungsmittel, besonders bevorzugt Glasfasern, insbesondere Schnittglasfasern.

Als Zusatzstoffe (D) in Betracht kommen auch funktionale Polymere, insbesondere Schlagzähmodifier, sofern diese im wesentlichen keine Absorption im Wellenlängenbereich des nahen Infrarots , insbesondere von 1000 nm bis 1600 nm aufweisen.

In Betracht kommen übliche Kautschuke, z. B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z. B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau M¹M²-, M¹M²M¹M²- oder M¹M²M¹-, wobei diese Blockpolymerisate auch Segmente mit statistischer Verteilung enthalten können, sowie Stern-Block-Copolymere. In Betracht kommen insbesondere Polymerisate konjugierter Diene wie Polybutadienkautschuk oder Polyisoprenkautschuk. Derartige synthetische Kautschuke sind dem Fachmann geläufig und zusammenfassend in "UIImanns Encyklopädie der Technischen Chemie", 4. Auflage, Bd. 13, Seiten 595 bis 634, Verlag Chemie GmbH, Weinheim 1977, beschrieben.

Als Flammschutzmittel kommen dem Fachmann bekannte Flammschutzmittel, insbesondere phosphorhaltige Verbindungen, insbesondere organische Phosphorverbindungen, sowie organische Halogenverbindungen in Betracht. Beispiele für Phosphorverbindungen sind Phosphorsäureester, Phosphinsäureester, Phosphinoxide, Phosphor und organische Phosphate, sofern diese im wesentlichen keine Absorption im Wellenlängenbereich des nahen Infrarots, insbesondere von 1000 nm bis 1600 nm aufweisen.

Der Fachmann wählt Zusatzstoffe (D) vorzugsweise so aus, dass diese im Bereich von 1000 nm bis 1600 nm transparent sind. Die Bestimmung der Transmission im genannten Wellenlängenbereich erfolgt nach dem unter Schwarzpigment (B) beschriebenen Verfahren.

Vorzugsweise weisen die Zusatzstoffe (D) eine hohe Wärmebeständigkeit auf. Insbesondere weisen die Zusatzstoffe (D) eine Wärmebeständigkeit nach DIN EN 12877-1 von mindestens 300°C auf.

In einer weiteren Ausführungsform kommen als Zusatzstoffe (D) solche in Betracht, die gegenüber Wärmestrahlung im Wellenlängenbereich des nahen Infrarots stark reflektierende Eigenschaften aufweisen. Durch stark reflektierende Zusatzstoffe (D) wird erreicht, dass die IR-Strahlung reflektiert wird und durch einen geeigneten Bereich innerhalb einer Baugruppe oder eines Bauteils, insbesondere durch die Frontscheibe eines Scheinwerfers, aus dem Bauteil in die Umgebung abgestrahlt wird. Insofern bewirken die reflektierenden Zusatzstoffe (D) lediglich eine Veränderung des Strahlenganges der Strahlung im Wellenlängenbereich des nahen Infrarots, bevor die Wärmestrahlung anschließend aus dem Bauteil oder der Baugruppe abgestrahlt wird.

Als im Wellenlängenbereich des nahen Infrarots reflektierende Zusatzstoffe (D) kommen im genannten Wellenlängenbereich stark streuende Fremdpartikel in Betracht, insbesondere Titandioxidpigmente und anorganische Mischphasenpigmente (z. B. Sicotan® Pigmente, BASF) oder im Wellenlängenbereich des nahen Infrarots stark reflektierende Fremdpartikel, wie Aluminiumflakes und Glanzpigmente, z. B. solche auf Basis beschichteter Aluminiumplättchen.

### Herstellung der thermoplastischen Formmassen

Ein erfindungsgemäßes Verfahren zur Herstellung der thermoplastischen Formmassen umfasst folgende Schritte:
(1) Bereitstellen der Komponenten (A) und (B) sowie gegebenenfalls (C) und (D)
(2) Durchmischung des organischen Schwarzpigmentes (B) und gegebenenfalls der Komponenten (C) und (D) mit dem thermoplastischen Polymer (A) in einer Mischvorrichtung.

Als Mischvorrichtungen kommen dem Fachmann bekannte Mischvorrichtungen wie Schneckenextruder, vorzugsweise Zweischneckenextruder, Brabender-Mühlen oder Banbury-Mühlen sowie Kneter in Betracht.

Vorzugsweise erfolgt die Durchmischung in Schritt (2) gemäß folgender nacheinander durchgeführter Schritte:
(2a) Optional Vorabmischung des thermoplastischen Polymers (A) und der Komponente (B) sowie gegebenenfalls der Komponenten (C) und (D) und anschließendes Einbringen der Vorabmischung im festen Zustand in die Mischvorrichtung,
(2b) Durchmischung der Komponenten (A) und (B) sowie optional (C) und (D) im fließfähigen Zustand der Komponente (A), vorzugsweise im geschmolzenen Zustand der Komponente (A), insbesondere durch Extrusion,
(2c) Optional Abkühlung der Mischung,
(2d) Optional Zerkleinerung der abgekühlten Mischung.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 260 bis 370°C, bevorzugt von 290 bis 360°C, erforderlich.

Die Reihenfolge der Zugabe der Komponenten kann variiert werden. In einer Ausführungsform werden zwei oder ggf. drei Komponenten vorgemischt und anschließend in die Mischvorrichtung eingebracht. In einer anderen Ausführungsform werden alle Komponenten gemeinsam vorgemischt und anschließend in die Mischvorrichtung eingebracht.

Die Einarbeitung der organischen Schwarzpigmente (B) in das Polymer (A) kann auch durch Walzen, Pressen oder Kneten erfolgen. Durch die vorgenannten Mischverfahren können die Kunststoffe zu Kunststoffformkörpern, Endlosprofilen, Platten, Folien, Fasern, Filmen und Beschichtungen verarbeitet werden.

Insbesondere betreffend der Zugabe des organischen Schwarzpigmentes kann man zwischen cold feed und hot feed unterscheiden. Unter cold feed soll verstanden werden, dass in Schritt (2a) eine Vorabmischung der Komponenten (A) und (B) im festen Zustand und anschließender Mischung in der Mischvorrichtung in Schritt (2b) unter fließfähigen Bedingungen des Polymers (A) erfolgt. Unter hot feed soll verstanden werden, dass die Zugabe des organischen Schwarzpigmentes (B) zum thermoplastischen Polymer (A) in Schritt (2b) innerhalb der Mischvorrichtung erfolgt, wenn sich das thermoplastische Polymer (A) bereits in einem fließfähigen, insbesondere geschmolzenen Zustand befindet.

Die cold feed Variante der Zugabe von (B) zu (A) ist bevorzugt, das heißt vorzugsweise werden die Komponenten (A) und (B) im festen Zustand gemischt und anschließend in der Mischvorrichtung aufgeschmolzen.

Die optionale Zugabe der Komponenten (C) und (D) kann ebenfalls via hot feed oder cold feed erfolgen.

Die Komponenten (B) und gegebenenfalls (C) und (D) werden in der Mischvorrichtung soweit als möglich homogen im Polymer (A) verteilt.

Die Auswahl der Parameter Durchsatz, Schneckendrehzahl und Schmelzetemperatur bei der Durchmischung hängt von der verwendeten Schneckenkombination und Extrudergröße ab und kann von einem Fachmann in wenigen Vorversuchen im Hinblick auf eine optimale Dispergiergüte der Pigmente optimiert werden.

In einer bevorzugten Ausführungsform werden in der vorgenannten Weise sogenannte Masterbatche erhalten, die häufig als Farb-Masterbatche oder Additiv-Masterbatche bezeichnet werden und das betreffende Pigment beziehungsweise die Additive in erhöhter Konzentration enthalten.

Der Einsatz von gefärbten Masterbatchen liefert gleichmäßig gefärbte Bauteile hoher farblicher Qualität. Diese weisen aber häufig schlechtere mechanische Eigenschaften auf als Bauteile der vergleichbaren ungefärbten Basispolymere. Farb-Masterbatche werden üblicherweise in Anteilen von 1 bis 15 % dem ungefärbten Granulat zugesetzt (sogenannter dry-mix). Beim Einsatz von Farb-Masterbatchen ist darauf zu achten, dass die Verteilung des Masterbatches im ungefärbten Granulat sehr gleichmäßig ist, damit keine Farbinhomogenitäten im Bauteil oder Farbschwankungen zwischen zwei oder mehreren Bauteilen auftreten. Derartige Inhomogenitäten oder Schwankungen lassen sich z.B. durch den Einsatz von speziellen Masterbatch-Dosieranlagen und/oder Mischelementen reduzieren. Beim Spritzgießen kommen sowohl statische Mischer, insbesondere im Düsenbereich, als auch dynamische Mischer, insbesondere im Bereich der Rückstromsperre, in Betracht.

Die Einarbeitung der organischen Schwarzpigmente (B) kann in einer weiteren Ausführungsform so erfolgen, dass die komplette thermoplastische Formmasse durchgefärbt wird, das heißt, dass die gesamte thermoplastische Formmasse bereits dieselbe Pigmentkonzentration aufweist, die im späteren Formteil vorliegt.

Die Körnergröße der Komponente (A) kann im erfindungsgemäßen Verfahren in einem weiten Bereich variieren, beispielsweise von einigen Mikrometern bis einigen Millimetern. Der Fachmann wählt eine für eine homogene Einarbeitung der Komponenten (B) und gegebenenfalls (C) und (D) in das thermoplastische Polymer (A) geeignete Körnergröße der Komponente (A) auf Basis einfacher Vorversuche.

Sofern die im erfindungsgemäßen Verfahren eingesetzte Komponente (A) Polyethersulfon (PESU) ist, dann beträgt die Schmelzvolumenrate MVR der Komponente (A) nach ISO 1133 bei 360°C und einer Prüflast von 10 kg gemäß einer bevorzugten Ausführungsform mindestens 40 cm³/10 min, insbesondere mindestens 60 cm³/10 min, besonders bevorzugt mindestens 80 cm³/10 min.

Die Herstellung von Formteilen oder Kunststoffbauteilen erfolgt anschließend vorzugsweise mittels bekannter Spritzgussverfahren. Weiterhin kommen dem Fachmann bekannte Verfahren zur Herstellung von Formteilen oder Kunststoffbauteilen wie die Extrusion von Halbzeug, beispielsweise zu Platten oder Profilen, oder das Blasformen, beispielsweise zu Flaschen oder Container, in Betracht. Zudem können die oben genannten Schritte (2c) und (2d) des erfindungsgemäßen Verfahrens insofern ausbleiben, als dass die noch fließfähige Mischung unmittelbar einer Weiterverarbeitung, beispielsweise mittels Spritzguss, zugeführt wird. Derartige Verfahren sowie Varianten davon sind dem Fachmann allgemein bekannt.

### Eigenschaften und Verwendung

Die erfindungsgemäßen thermoplastischen Formmassen zeichnen sich durch eine hohe Temperaturbeständigkeit bei gleichzeitig hoher Migrationsechtheit aus. Insbesondere zeigen die aus den erfindungsgemäßen thermoplastischen Formmassen erhältlichen Formkörper oder Bauteile eine besonders niedrige Erwärmung durch Hitzeakkumulation, falls die betreffenden Formkörper oder Bauteile starke Wärmequellen einschließen, insbesondere Lichtquellen oder elektrische beziehungsweise elektronische Bauteile. Gleichzeitig zeigen die so erhältlichen Formkörper und Bauteile eine hohe Lichtdichtigkeit im Wellenlängenbereich des sichtbaren Lichtes.

Die erfindungsgemäßen Formmassen zeichnen sich zudem durch gute mechanische Eigenschaften, wie beispielsweise hohe Wärmeformbeständigkeit, Kerbschlagzähigkeit und Steifigkeit aus. Darüber hinaus zeigen die erfindungsgemäßen Formmassen eine hohe Verarbeitungsstabilität, insbesondere Schmelzestabilität, und gute Fließeigenschaften.

Vorzugsweise kommen Formkörper, Bauteile, Folien oder Membrane, welche die erfindungsgemäßen thermoplastischen Formmassen enthalten, in Anwendungen zum Einsatz, in denen die genannten Teile dauerhafter Bestrahlung durch Licht oder anderen Wärmequellen ausgesetzt sind. Besonders bevorzugt werden die erfindungsgemäßen thermoplastischen Formmassen zur Herstellung von Scheinwerfern, Scheinwerferreflektoren, -blenden und -gehäusen, insbesondere im Automobilbereich, eingesetzt.

Darüber hinaus kommen die erfindungsgemäßen thermoplastischen Formmassen vorzugsweise in Kunststoffbauteilen, Formkörpern, Folien oder Membrane in Elektronik- und Elektroanwendungen zum Einsatz, insbesondere in Gehäusen und Abdeckungen von Geräten, die im Dauerbetrieb hohe Abwärmemengen generieren.

Die erfindungsgemäßen Formmassen eignen sich zudem zur Herstellung von Kunststoffbauteilen, Formteilen, Folien oder Fasern, die beispielsweise als Haushaltsartikel, elektrische oder elektronische Bauteile oder medizinisch-technische Geräte verwendet werden.

### Beispiele

### Herstellung der organischen Schwarzpigmente (B)

Perylenpigment a: cis/trans-Isomerengemisch der Formel P-Ia und P-Ib mit R¹ = R² = 1,2-Phenylen und n = 0
a) Herstellung des Rohpigments: In eine gerührte Schmelze von 318 g Phenol bei 70°C wurden 78,4 g Perylen-3,4:9,10-tetracarbonsäuredianhydrid, 16,3 g Piperazin und 51,9 g o-Phenylendiamin eingetragen. Nach Erhitzen der Mischung auf 180°C wurde 8 h bei dieser Temperatur gerührt. Das entstehende Reaktionswasser destillierte dabei als Azeotrop mit Phenol ab. Nach Abkühlen auf 130°C, langsamem Zutropfen von 350 g Methanol und einstündigem Nachrühren bei 60°C wurde das Reaktionsprodukt abfiltriert, mit Methanol gewaschen, bis ein klares Filtrat entstand, im Vakuum bei 100°C getrocknet und danach pulverisiert. Es wurden 106 g eines schwarzen Pulvers, das in Form von nadelförmigen Kristallen von einer Größe bis zu über 10 µm vorlag, erhalten, was einer Ausbeute von 99% entspricht.
b) Pigmentformierung: 50 g des in Schritt a) erhaltenen schwarzen Pulvers wurden in einer mit 2,6 kg Stahlkugeln (Durchmesser 25 mm) gefüllten 1,3 I-Schwingmühle 10 h gemahlen. Das Mahlgut wurde dann nach Abtrennung der Mahlkugeln in einer Mischung aus 250 g Toluol und 250 g Wasser in einem Autoklav 5 h bei 150°C gerührt. Nach azeotropem Abdestillieren des Toluols wurde das Produkt abfiltriert, mit Wasser gewaschen und im Umlufttrockenschrank bei 100°C getrocknet und danach pulverisiert. Das erhaltene kristalline schwarze Perylenpigment a wies eine Primärteilchengröße im Bereich von 40 bis 300 nm auf.

Perylenpigment b: cis/trans-Isomerengemisch der Formel P-Ia und P-Ib mit R¹ = R² = 1,8-Naphthylen und n = 0
a) Herstellung des Rohpigments: In eine gerührte Schmelze von 265 g Phenol bei 70°C wurden 78,4 g Perylen-3,4:9,10-tetracarbonsäuredianhydrid, 16,3 g Piperazin und 75,9 g 1,8-Diaminonaphthalin eingetragen. Nach Erhitzen der Mischung auf 180°C wurde 8 h bei dieser Temperatur gerührt. Das entstehende Reaktionswasser destillierte dabei als Azeotrop mit Phenol ab. Nach Abkühlen auf 130°C, langsamem Zutropfen von 350 g Methanol und einstündigem Nachrühren bei 60°C wurde das Reaktionsprodukt abfiltriert, mit Methanol gewaschen, bis ein klares Filtrat entstand, im Vakuum bei 100°C getrocknet und danach pulverisiert. Es wurden 125 g eines schwarzen Pulvers, das in Form von nadelförmigen Kristallen von einer Größe von 90 bis 300 nm vorlag, erhalten, was einer Ausbeute von 98% entspricht.
b) Pigmentformierung: 50 g des in Schritt a) erhaltenen schwarzen Pulvers wurden in einer mit 2,6 kg Stahlkugeln (Durchmesser 25 mm) gefüllten 1,3 I-Schwingmühle 10 h gemahlen. Das Mahlgut wurde dann nach Abtrennung der Mahlkugeln in 700 g Xylol in einem Autoklav 5 h bei 180°C gerührt. Nach Abdestillieren des Xylols im Vakuum wurde das Produkt im Umlufttrockenschrank bei 100°C getrocknet und danach pulverisiert. Das erhaltene kristalline schwarze Perylenpigment b wies eine Primärteilchengröße im Bereich von 30 bis 150 nm auf.

### Compoundierung

Die Einarbeitung der Pigmente und sonstigen Additive erfolgte auf einem Doppelschneckenextruder ZSK 25 der Firma Werner & Pfleiderer mit einem UD von 34. Der Durchsatz lag bei 10kg/h mit einer Schneckendrehzahl von 400-500 rpm und Schmelzetemperatur von 310-330°C.

### Spritzguss

Zur Herstellung von Musterplättchen (80x60x2mm) wurde eine Spritzgussmaschine der Firma Arburg, Maschinentyp 270S (UD: 21,4) eingesetzt. Die Schmelzetemperatur lag bei 360°C, die Formtemperatur bei 160°C. Das Schussgewicht von 29g wurde innerhalb von 1,17s eingetragen und anschließend für 20 s ein Nachdruck von 800 bar gehalten. Alle Produkte wurden vor dem Spritzgießen bei 140°C (4h) getrocknet.

### Eingesetzte thermoplastische Polymere (A)

### PESU-1

Als Komponente (A) "PESU-1" wurde ungefärbtes Poly(oxy-1,4-phenylensulfonyl-1,4-phenylen), welches gemäß ISO 1043 als Polyethersulfon (PESU) bezeichnet wird, mit einem MVR von 150 cm³/10 min nach ISO 1133 bei 360°C und einer Prüflast von 10 kg eingesetzt (Ultrason® E1010 natur der BASF Aktiengesellschaft). Das PES enthielt keine Pigmente. Das PESU wurde auf o.g. Laborextruder zu Masterbatchen verarbeitet.

### PESU-V2

Als Komponente (A) "PESU-V2" wurde ein durch Russ schwarz eingefärbtes Polyethersulfon (PESU gemäß ISO 1043) mit einem MVR von 77 cm³/10 min nach ISO 1133 bei 360°C und einer Prüflast von 10 kg eingesetzt (Ultrason® E201 0 schwarz Q31 der BASF Aktiengesellschaft). Es handelt sich hierbei um eine herkömmliche nicht erfindungsgemäße thermoplastische Formmasse.

### PESU-3

Als Komponente (A) "PESU-3" wurde ein ungefärbtes Polyethersulfon (PESU gemäß ISO 1043) mit einem MVR von 77 cm³/10 min nach ISO 1133 bei 360°C und einer Prüflast von 10 kg eingesetzt (Ultrason® E2010 natur der BASF Aktiengesellschaft).

### PEI-1

Als Komponente (A) "PEI-1" wurde Polyetherimid (PEI) der Struktur VI₁ von GE Plastics (Ultem® 1010) mit einem MVR von 70 cm³/10 min nach ISO 1133 bei 360°C und einer Prüflast von 10 kg eingesetzt.

Herstellung der Masterbatche:

| Masterbatch | Komponente (A) | Komponente (B) | Komponente (C) |
|---|---|---|---|
| 1 | PESU-1 | 2 Gew.-% Perylenpigment a | 0 Gew.-% |
| 2 | PESU-1 | 2 Gew.-% Perylenpigment b | 0 Gew.-% |
| 3 | PESU-1 | 4 Gew.-% Perylenpigment b | 0 Gew.-% |
| 4 | PESU-1 | 2 Gew.-% Perylenpigment b | 5 Gew.-% Stearinsäure (CAS-Nr. 57-11-4) |
| 5 | PESU-1 | 4 Gew.-% Perylenpigment b | 5 Gew.-% Stearinsäure (CAS-Nr. 57-11-4) |
| 6 | PEI-1 | 4 Gew.-% Perylenpigment b | 0 Gew.-% |

### Beispiel 1

96 Gewichtsteile PESU-3 wurden mit 4 Gewichtsteilen Masterbatch 1 vermischt und nach Trocknung des Granulats zu schwarzen 2 mm starken Plättchen verarbeitet. Die Konzentration des organischen Schwarzpigments (B) in den Plättchen betrug 0,08 Gew.-%.

### Beispiel 2

96 Gewichtsteile PESU-3 wurden mit 4 Gewichtsteilen Masterbatch 2 vermischt und nach Trocknung des Granulats zu schwarzen 2 mm starken Plättchen verarbeitet.

### Beispiel 3

96 Gewichtsteile PESU-3 wurden mit 4 Gewichtsteilen Masterbatch 3 vermischt und nach Trocknung des Granulats zu schwarzen 2 mm starken Plättchen verarbeitet. Die Konzentration des organischen Schwarzpigments (B) in den Plättchen betrug 0,16 Gew.-%.

### Beispiel 4

92 Gewichtsteile PESU-3 wurden mit 8 Gewichtsteilen Masterbatch 3 vermischt und nach Trocknung des Granulats zu schwarzen 2mm starken Plättchen verarbeitet. Die Pigmentkonzentration der Plättchen lag damit bei 0,32 Gew.-%.

### Beispiel 5

96 Gewichtsteile PESU-3 wurden mit 4 Gewichtsteilen Masterbatch 4 vermischt und nach Trocknung des Granulats zu schwarzen 2mm starken Plättchen verarbeitet.

### Beispiel 6

96 Gewichtsteile PESU-3 wurden mit 4 Gewichtsteilen Masterbatch 5 vermischt und nach Trocknung des Granulats zu schwarzen 2mm starken Plättchen verarbeitet.

### Beispiel 7

96 Gewichtsteile PEI-1 wurden mit 4 Gewichtsteilen Masterbatch 6 vermischt und nach Trocknung des Granulats zu schwarzen 2mm starken Plättchen verarbeitet. Die Pigmentkonzentration der Plättchen lag damit bei 0,16 Gew.-%.

### Vergleichsbeispiel 8

100 Gewichtsteile PESU-V2 wurden in der vorgenannten Weise zu schwarzen 2 mm starken Plättchen verarbeitet.

### Messungen

### Temperaturmessung

Um das Aufheizverhalten der Plättchen bei Wärmeeinstrahlung zu untersuchen, wurden sie für 2 min in einem Abstand von 2 cm oberhalb einer 20 Watt Halogenlampe platziert, dann entfernt und nach 10 s Wartezeit mit einer IR-Wärmebildkamera die Temperatur der lampenzugewandten Seite gemessen. Die Ergebnisse sind in Tabelle 1 zusammengefasst.

Die erfindungsgemäßen thermoplastischen Formmassen zeigen deutlich geringere Temperaturen im Vergleich zum konventionell (mit Ruß) schwarz eingefärbten Produkt (Vergleichsbeispiel V8) auf.

Die Verwendung eines Entformungshilfsmittels führt bei gleicher Pigmentkonzentration zu einer höheren Undurchlässigkeit im Wellenlängenbereich des sichtbaren Lichts, wobei die gemessene Oberflächentemperatur zumindest gleich niedrig ist. Soll die gleiche Lichtdichtigkeit ohne Entformungshilfsmittel erzielt werden, dann muss die Pigmentkonzentration erhöht werden, was zu höheren Oberflächentemperaturen führt.

| Beispiel | 1 | 2 | 3 | 4 | 5 | 6 | 7 | V8 |
|---|---|---|---|---|---|---|---|---|
| Masterbatch Nr. | 1 | 2 | 3 | 3 | 4 | 5 | 6 | PESU-V2 |
| Entformungsmittel (C) | nein | nein | nein | nein | ja | ja | nein | ja |
| Perylenpigment a [Gew.-%] | 0,08 | - | - | - | - | - | - | - |
| Perylenpigment b [Gew.-%] | - | 0,08 | 0,16 | 0,32 | 0,08 | 0,16 | 0,16 | - |
| Lichtdichtigkeit* | O | O/+ | + | ++ | + | ++ | ++ | ++ |
| Temperatur [°C] | 118 | 130 | 143 | 155 | 130 | 140 | 145 | 192 |

| | | | | | | | | |
|---|---|---|---|---|---|---|---|---|
| * qualitative Beurteilung: (++) = sehr hoch; (+) = hoch; (O) = mittel; (-) = gering; | | | | | | | | |

## Patentansprüche

1. Thermoplastische Formmassen enthaltend
(A) mindestens 34 Gew.-% mindestens eines thermoplastischen Polymers ausgewählt aus (i) Polyarylenethern, (ii) Polyetherimiden, (iii) Polyarylensulfiden und (iv) Polycarbonaten mit einer Glasübergangstemperatur von mindestens 145°C, sowie Copolymere der vorgenannten Polymere (i) bis (iv), .
(B) von 0,01 bis 10 Gew.-% mindestens eines organischen Schwarzpigments, welches im Bereich von 1000 nm bis 1600 nm transparent ist und eine Wärmebeständigkeit nach DIN EN 12877-1 von mindestens 300°C aufweist,
(C) von 0,01 bis 6 Gew.-% mindestens eines Entformungsmittels ausgewählt aus Fettsäuren und deren Metallsalze, Ester und Amide, und
(D) von 0 bis 50 Gew.-%, ein oder mehrerer Zusatzstoffe,
wobei die Summe der Gew.-% aus (A), (B), (C) und (D) 100 Gew.-% ergibt.

2. Thermoplastische Formmassen nach Anspruch 1, wobei die thermoplastischen Formmassen als Komponente (B) von 0,01 bis 10 Gew.-% mindestens eines der Isomere P-Ia oder P-Ib enthalten: 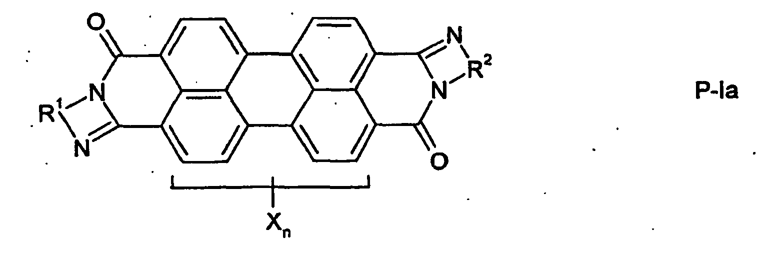 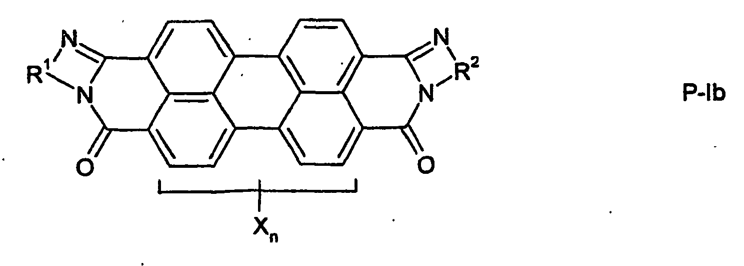 wobei die Variablen in P-Ia und P-Ib folgende Bedeutung haben:
R¹, R² unabhängig voneinander Phenylen, Naphthylen oder Pyridylen, das jeweils ein- oder mehrfach durch C₁-C₁₂-Alkyl, C₁-C₆-Alkoxy, Hydroxy, Nitro und/oder Halogen substituiert sein kann;
X Halogen;
n 0 bis 4.

3. Thermoplastische Formmassen nach den Ansprüchen 1 oder 2, wobei die thermoplastischen Formmassen als Komponente (B) von 0,01 bis 10 Gew.-% mindestens eines der Isomere P-Ia' oder P-Ib' enthalten: 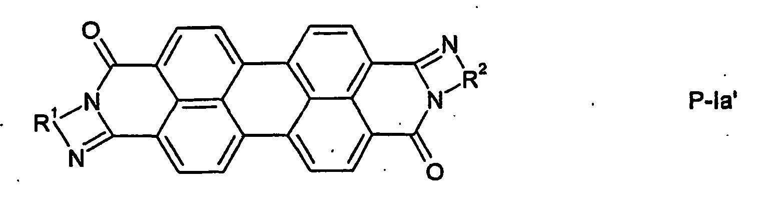 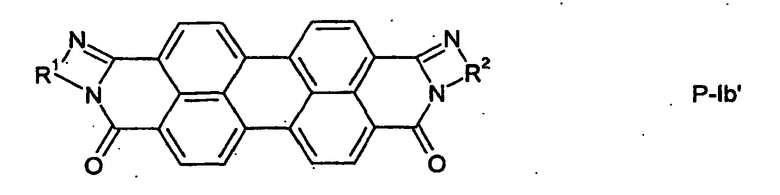 wobei die Variablen in P-Ia' und P-Ib' folgende Bedeutung haben:
R¹, R² unabhängig voneinander Phenylen, Naphthylen oder Pyridylen, das jeweils ein- oder mehrfach durch C₁-C₁₂-Alkyl, C₁-C₆-Alkoxy, Hydroxy, Nitro und/oder Halogen substituiert sein kann.

4. Thermoplastische Formmassen nach den Ansprüchen 2 oder 3, wobei die Reste R¹ und R² gleich sind und unsubstituiertes Phenylen oder Naphthylen bedeuten.

5. Thermoplastische Formmassen nach den Ansprüchen 1 bis 4, wobei die thermoplastischen Formmassen als Komponente (A) von 34 bis 99,99 Gew.-% mindestens eines thermoplastischen Polymers ausgewählt aus Polyarylenethern und Copolyarylenethern enthalten.

6. Thermoplastische Formmassen nach den Ansprüchen 1 bis 5, wobei die thermoplastischen Formmassen als Komponente (A) von 34 bis 99,99 Gew.-% mindestens eines thermoplastischen Polymers ausgewählt aus Polyetherimiden und Copolyetherimiden enthalten.

7. Thermoplastische Formmassen nach den Ansprüchen 1 bis 6, wobei die thermoplastischen Formmassen als Komponente (A) von 34 bis 99,99 Gew.-% mindestens eines thermoplastischen Polymers ausgewählt aus Polycarbonaten und Copolycarbonaten mit einer Glasübergangstemperatur von mindestens 145°C enthalten.

8. Thermoplastische Formmassen nach den Ansprüchen 1 bis 7, wobei das mindestens eine Entformungsmittel ausgewählt ist aus der Gruppe der Verbindungen bestehend aus Stearinsäure und Metallsalzen der Stearinsäure.

9. Verfahren zur Herstellung von thermoplastischen Formmassen gemäß den Ansprüchen 1 bis 8, umfassend
(1) Bereitstellen der Komponenten (A) und (B) sowie gegebenenfalls (C) und (D)
(2) Durchmischung des organischen Schwarzpigmentes (B) und gegebenenfalls der Komponenten (C) und (D) mit dem thermoplastischen Polymer (A) in einer Mischvorrichtung.

10. Verfahren nach Anspruch 9, wobei die Komponenten (A) und (B) im festen Zustand gemischt und anschließend in der Mischvorrichtung aufgeschmolzen werden.

11. Formteile, erhältlich aus den thermoplastischen Formmassen gemäß den Ansprüchen 1 bis 8.

12. Verwendung der thermoplastischen Formmassen gemäß den Ansprüchen 1 bis 8 zur Herstellung von Kunststoffbauteilen, Formkörpern, Folien oder Membranen.

13. Verwendung der thermoplastischen Formmassen gemäß den Ansprüchen 1 bis 8 zur Verringerung der Hitzeakkumulation in Kunststoffbauteilen, Formkörpern, Folien oder Membranen.

14. Verwendung der thermoplastischen Formmassen gemäß den Ansprüchen 1 bis 8 zur Verringerung der Hitzeakkumulation in Scheinwerferreflektoren oder Scheinwerfergehäusen.

## Claims

1. A thermoplastic molding composition comprising
(A) at least 34% by weight of at least one thermoplastic polymer selected from (i) polyarylene ethers, (ii) polyetherimides, (iii) polyarylene sulfides, and (iv) polycarbonates with glass transition temperature of at least 145°C, or else copolymers of the abovementioned polymers (i) to (iv),
(B) from 0.01 to 10% by weight of at least one organic black pigment which is transparent in the range from 1000 nm to 1600 nm and which has thermal stability up to at least 300°C to DIN EN 12877-1,
(C) from 0.01 to 6% by weight of at least one mold-release agent selected from fatty acids and their metal salts, esters and amides, and
(D) from 0 to 50% by weight of one or more additives,
where the total of the % by weight figures from (A), (B), (C) and (D) gives 100% by weight.

2. The thermoplastic molding composition according to claim 1, where the thermoplastic molding composition comprises, as component (B), from 0.01 to 10% by weight of at least one of the isomers P-Ia or P-Ib: 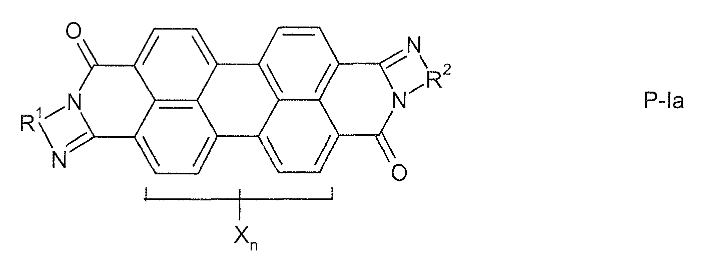 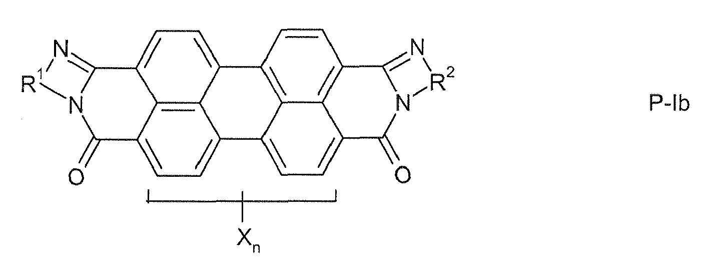 where the variables in P-Ia and P-Ib have the following meaning:
R¹, R² independently of one another, phenylene, naphthylene, or pyridylene, each of which can have one or more C₁-C₁₂-alkyl, C₁-C₆-alkoxy, hydroxy, nitro, and/or halogen substituents;
X halogen;
n from 0 to 4.

3. The thermoplastic molding composition according to claim 1 or 2, where the thermoplastic molding composition comprises, as component (B), from 0.01 to 10% by weight of at least one of the isomers P-Ia' or P-Ib': 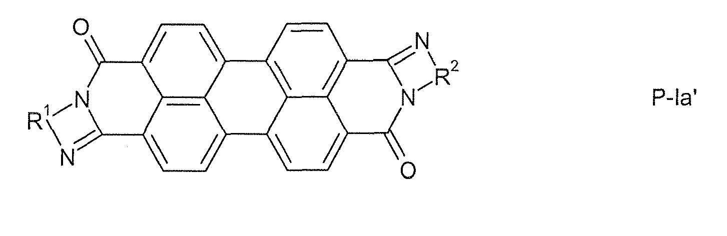 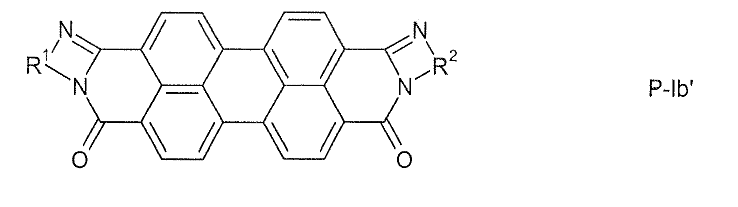 where the variables in P-Ia' and P-Ib' have the following meaning:
R¹, R² independently of one another, phenylene, naphthylene, or pyridylene, each of which can have one or more C₁-C₁₂-alkyl, C₁-C₆-alkoxy, hydroxy, nitro, and/or halogen substituents.

4. The thermoplastic molding composition according to claim 2 or 3, where the radicals R¹ and R² are identical and mean unsubstituted phenylene or naphthylene.

5. The thermoplastic molding composition according to claims 1 to 4, where the thermoplastic molding composition comprises, as component (A), from 34 to 99.99% by weight of at least one thermoplastic polymer selected from polyarylene ethers and copolyarylene ethers.

6. The thermoplastic molding composition according to claims 1 to 5, where the thermoplastic molding composition comprises, as component (A), from 34 to 99.99% by weight of at least one thermoplastic polymer selected from polyetherimides and copolyetherimides.

7. The thermoplastic molding composition according to claims 1 to 6, where the thermoplastic molding composition comprises, as component (A), from 34 to 99.99% by weight of at least one thermoplastic polymer selected from polycarbonates and
copolycarbonates with glass transition temperature of at least 145°C.

8. The thermoplastic molding composition according to claims 1 to 7, where the at least one mold-release agent has been selected from the group of the compounds consisting of stearic acid and metal salts of stearic acid.

9. A process for preparation of thermoplastic molding compositions according to claims 1 to 8, comprising
(1) provision of components (A) and (B), and also, if appropriate, (C) and (D)
(2) mixing of the organic black pigment (B) and, if appropriate, of components (C) and (D) with the thermoplastic polymer (A) in a mixing apparatus.

10. The process according to claim 9, where components (A) and (B) are mixed in the solid state and then are melted in the mixing apparatus.

11. A molding, obtainable from the thermoplastic molding compositions according to claims 1 to 8.

12. The use of the thermoplastic molding compositions according to claims 1 to 8 for production of plastics components, moldings, foils, or membranes.

13. The use of the thermoplastic molding compositions according to claims 1 to 8 for reducing heat accumulation in plastics components, moldings, foils, or membranes.

14. The use of the thermoplastic molding compositions according to claims 1 to 8 for reducing heat accumulation in headlamp reflectors or headlamp housings.

## Revendications

1. Matériaux de moulage thermoplastiques, contenant
(A) au moins 34 % en poids d'au moins un polymère thermoplastique choisi parmi (i) les éthers de polyarylène, (ii) les polyéther-imides, (iii) les sulfures de polyarylène et (iv) les polycarbonates ayant une température de transition vitreuse d'au moins 145 °C, ainsi que les copolymères des polymères (i) à (iv) susmentionnés,
(B) de 0,01 à 10 % en poids d'au moins un pigment noir organique, qui est transparent dans la plage allant de 1 000 nm à 1 600 nm et présente une résistance à la chaleur selon DIN EN 12877-1 d'au moins 300 °C,
(C) de 0,01 à 6 % en poids d'au moins un agent de démoulage choisi parmi les acides gras et leurs sels métalliques, esters et amides, et
(D) de 0 à 50 % en poids d'un ou de plusieurs additifs,
la somme des % en poids de (A), (B), (C) et (D) étant de 100 % en poids.

2. Matériaux de moulage thermoplastiques selon la revendication 1, dans lesquels les matériaux de moulage thermoplastiques contiennent en tant que composant (B) de 0,01 à 10 % en poids d'au moins un des isomères P-Ia ou P-Ib : 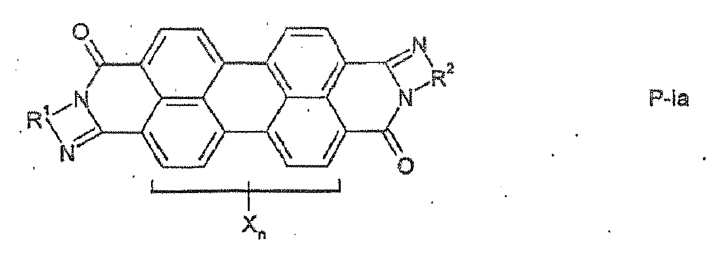 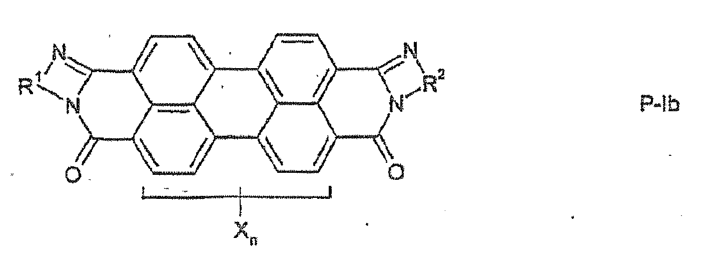 les variables dans P-Ia et P-Ib ayant la signification suivante :
R¹, R² indépendamment l'un de l'autre phénylène, naphtylène ou pyridylène, qui peut à chaque fois être substitué une ou plusieurs fois par alkyle en C₁-C₁₂, alcoxy en C₁-C₆, hydroxy, nitro et/ou halogène ;
X halogène ;
n 0 à 4.

3. Matériaux de moulage thermoplastiques selon les revendications 1 ou 2, dans lesquels les matériaux de moulage thermoplastiques contiennent en tant que composant (B) de 0,01 à 10 % en poids d'au moins un des isomères P-Ia' ou P-Ib' : 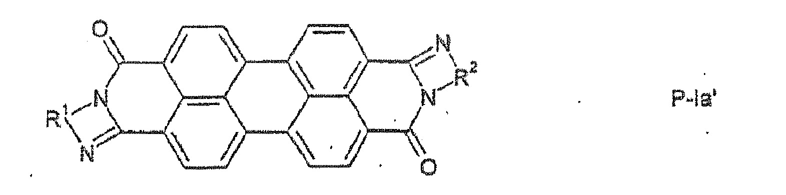 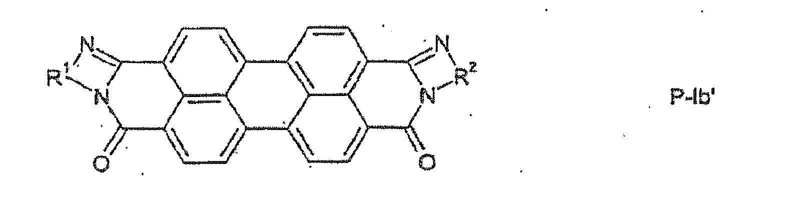 les variables dans P-Ia' et P-Ib' ayant la signification suivante :
R¹, R² indépendamment l'un de l'autre phénylène, naphtylène ou pyridylène, qui peut à chaque fois être substitué une ou plusieurs fois par alkyle en C₁-C₁₂, alcoxy en C₁-C₆, hydroxy, nitro et/ou halogène.

4. Matériaux de moulage thermoplastiques selon les revendications 2 ou 3, dans lesquels les radicaux R¹ et R² sont identiques et signifient phénylène ou naphtylène non substitué.

5. Matériaux de moulage thermoplastiques selon les revendications 1 à 4, dans lesquels les matériaux de moulage thermoplastiques contiennent en tant que composant (A) de 34 à 99,99 % en poids d'au moins un polymère thermoplastique choisi parmi les éthers de polyarylène et les éthers de copolyarylène.

6. Matériaux de moulage thermoplastiques selon les revendications 1 à 5, dans lesquels les matériaux de moulage thermoplastiques contiennent en tant que composant (A) de 34 à 99,99 % en poids d'au moins un polymère thermoplastique choisi parmi les polyéther-imides et les copolyéther-imides.

7. Matériaux de moulage thermoplastiques selon les revendications 1 à 6, dans lesquels les matériaux de moulage thermoplastiques contiennent en tant que composant (A) de 34 à 99,99 % en poids d'au moins un polymère thermoplastique choisi parmi les polycarbonates et les copolycarbonates ayant une température de transition vitreuse d'au moins 145 °C.

8. Matériaux de moulage thermoplastiques selon les revendications 1 à 7, dans lesquels le ou les agents de démoulage sont choisis dans le groupe de composés constitué par l'acide stéarique et les sels métalliques de l'acide stéarique.

9. Procédé de fabrication de matériaux de moulage thermoplastiques selon les revendications 1 à 8, comprenant
(1) la préparation des composants (A) et (B), ainsi qu'éventuellement (C) et (D)
(2) le mélange du pigment noir organique (B) et éventuellement des composants (C) et (D) avec le polymère thermoplastique (A) dans un dispositif de mélange.

10. Procédé selon la revendication 9, dans lequel les composants (A) et (B) sont mélangés à l'état solide et ensuite fondus dans le dispositif de mélange.

11. Pièces moulées, pouvant être obtenues à partir des matériaux de moulage thermoplastiques selon les revendications 1 à 8.

12. Utilisation des matériaux de moulage thermoplastiques selon les revendications 1 à 8 pour la fabrication d'éléments en plastique, de corps moulés, de films ou de membranes.

13. Utilisation des matériaux de moulage thermoplastiques selon les revendications 1 à 8 pour la réduction de l'accumulation de chaleur dans des éléments en plastique, des corps moulés, des films ou des membranes.

14. Utilisation des matériaux de moulage thermoplastiques selon les revendications 1 à 8 pour la réduction de l'accumulation de chaleur dans des réflecteurs de phares ou dans des boîtiers de phares.
